# EUROPÄISCHE PATENTSCHRIFT

(11) **EP 3 298 901 B1**
(45) Veröffentlichungstag und Bekanntmachung des Hinweises auf die Patenterteilung: **17.04.2024**
(21) Anmeldenummer: 17179838.2
(22) Anmeldetag: 05.07.2017
(51) Int. Cl.: A22C 21/04, C02F 1/00, C02F 103/22, C02F 1/02

(54) **BRÜHWASSERHYGIENISIERUNG IN EINEM SCHLACHTHOF**
HYGIENISATION OF SCALDING WATER IN A SLAUGHTER HOUSE
STÉRILISATION D'EAU D'ÉCHAUDAGE DANS UN ABATTOIR

(30) Priorität: 05.07.2016 DE 102016112245
(43) Veröffentlichungstag der Anmeldung: 28.03.2018
(73) Patentinhaber: Lohmann & Co. AG, 49429 Visbek (DE)
(72) Erfinder: Kamphaus, Josef, 49393 Lohne (DE); Wesjohann, Paul-Heinz, 49429 Visbek-Rechterfeld (DE)
(74) Vertreter: Eisenführ Speiser

(56) Entgegenhaltungen:
- EP-A1- 0 551 123
- EP-A1- 1 787 519
- DE-A1-102004 024 163
- US-A- 4 852 215
- US-A- 4 996 741

## Beschreibung

Die Erfindung betrifft ein System, und ein Verfahren zum Behandeln von Brühwasser in einem Schlachthof.

Als Stand der Technik werden die Druckschriften EP 0 551 123 A1, US 4 996 741 A, US 4 852 215 A, NL 1009188 C und EP 1 787 519 A1 genannt. Dabei bezieht sich die Druckschrift EP 1 787 519 A1 auf eine Brühvorrichtung für Geflügel, die einen Überkopf-Förderer zum Fördern von an den Beinen aufgehängtem Geflügel, einen mit Brühwasser zum Brühen des Geflügels gefüllten Tauchtank sowie ein Filtergerät und eine Pumpeinheit zum Entziehen von zu reinigendem Brühwasser aus dem Tauchtank aufweist, wobei an der Unterseite des Tauchtanks aufwärtsgerichtete Düsen angebracht sind, um einen vertikal über das Geflügel gerichteten Brühwasserstrom zu erzeugen, der von einer Rückführung an der Oberseite des Tauchtanks abwärts auf das Geflügel gerichtet wird.

Die Qualität von zum Verzehr vorgesehenem Fleisch wird unter anderem bestimmt durch verschiedene Parameter, wie zum Beispiel die Konzentration von Keimen oder Chemikalien im und auf dem Fleisch. Die Konzentration von Keimen im oder auf dem Fleisch hat außerdem einen direkten Einfluss auf die Haltbarkeit des Produktes.

Um den Verbrauchern Fleisch mit möglichst hoher Qualität anzubieten, ist es notwendig, bereits die gesamte Produktion des Fleischs nach der Schlachtung auf dieses Ziel auszurichten. Verunreinigungen oder Keimbelastungen, die nach der Schlachtung im Produktionsprozess auftreten, können nur schwer wieder entfernt werden. Zumeist ist in einem solchen Fall der Einsatz von Chemikalien notwendig, um eine gesundheitlich unbedenkliche Keimkonzentration über einen längeren Zeitraum zu gewährleisten. Da Chemikalien jedoch zu Rückständen im oder am Fleisch führen können, ergibt sich aus Sicht der Verbraucher durch den Einsatz von Chemikalien eine Qualitätsverringerung des Fleischprodukts und diese Form der Keim- und Verunreinigungsreduktion wird derzeit nicht von den Verbrauchern akzeptiert.

Gleichzeitig führt die globale Vermarktung von Fleischprodukten zu der Notwendigkeit, die Haltbarkeit von für den Verzehr vorgesehenem Fleisch zu erhöhen, um auch Märkte außerhalb der Länder zu beliefern, in denen die Schlachttiere aufgezogen und geschlachtet werden.

Es besteht folglich ein Bedarf an Fleisch mit konstant hoher Qualität mit einer langen Mindesthaltbarkeit. Aus diesem Grund ist es ein Ziel der vorliegenden Erfindung, eine möglichst konstante, hohe Qualität und Haltbarkeit von zum Verzehr vorgesehenem Fleisch, insbesondere Geflügelfleisch zu erreichen.

Ein Aspekt der Erfindung, der die obige technische Aufgabe löst, betrifft ein Brühwassersystem gemäß Anspruch 1 zum Behandeln von Brühwasser in einem Schlachthof, wobei das Brühwassersystem aufweist: einen Brühbehälter, insbesondere einen Brühkessel oder eine Brühwanne, mit Brühwasser zum Brühen von Schlachttieren, insbesondere Geflügel, ein Brühwasserbehandlungssystem geeignet zur Entnahme von Brühwasser mit einer ersten Brühwassertemperatur aus dem Brühbehälter, zum Pasteurisieren des entnommenen Brühwassers und zum Zurückführen des Brühwassers in den Brühbehälter nach der Pasteurisierung, wobei der Brühbehälter und das Brühwasserbehandlungssystem einen (teilweise oder vollständig) geschlossenen Brühwasserkreislauf bilden, der einen Wärmetauscher aufweist, dadurch gekennzeichnet, dass der Wärmetauscher ein erstes Wärmetauschelement umfasst, das geeignet ist, Brühwasser aus dem Brühbehälter mit der ersten Brühwassertemperatur auf eine zweite Brühwassertemperatur zu erhitzen, und ein zweites Wärmetauschelement, das geeignet ist, das Brühwasser aus dem ersten Wärmetauschelement auf eine dritte Brühwassertemperatur zu erhitzen, wobei die dritte Brühwassertemperatur zum Pasteurisieren von Brühwasser geeignet ist, wobei das erste Wärmetauschelement geeignet ist, das Brühwasser aus dem zweiten Wärmetauschelement auf die erste Brühwassertemperatur abzukühlen, wobei die erste Brühwassertemperatur zum Brühen von Schlachttieren, insbesondere Geflügel, geeignet ist.

Ein weiterer Aspekt betrifft gemäß Anspruch 16 ein Verfahren zur Behandlung von Brühwasser in einem Schlachthof, wobei das Verfahren die Schritte umfasst: Entnehmen von Brühwasser aus einem Brühbehälter, Pasteurisieren von Brühwasser und Zurückführen von Brühwasser in den Brühbehälter nach der Pasteurisierung, wobei die Schritte des Entnehmens, Pasteurisierens und Zurückführens einen geschlossenen Brühwasserkreislauf bilden und wobei der Schritt des Pasteurisierens weiter die Schritte umfasst: Leiten des Brühwassers nach der Entnahme aus dem Brühbehälter durch ein erstes Wärmetauschelement, Erhitzen des Brühwassers im ersten Wärmetauschelement von einer ersten Brühwassertemperatur auf eine zweite Brühwassertemperatur, Leiten des Brühwassers aus dem ersten Wärmetauschelement in ein zweites Wärmetauschelement, Erhitzen des Brühwassers im zweiten Wärmetauschelement auf eine dritte Brühwassertemperatur, wobei die dritte Brühwassertemperatur zum Pasteurisieren von Brühwasser geeignet ist, Zurückführen des Brühwassers aus dem zweiten Wärmetauschelement in das erste Wärmetauschelement, Abkühlen des Brühwassers auf die erste Brühwassertemperatur, wobei die erste Brühwassertemperatur zum Brühen von Schlachttieren geeignet ist.

Diese Aspekte der vorliegenden Erfindung nutzen aus, dass durch das Pasteurisieren des Brühwassers und durch die Wiederverwendung des pasteurisierten Brühwassers in einem geschlossenen Brühwasserkreislauf die Konzentration der Keime im Brühwasser gering (z. B. eines geringen definierten Niveaus) gehalten werden kann. Da das Brühwasser beständig aus dem Brühbehälter entnommen, pasteurisiert und wieder dem Brühbehälter zugeführt wird, treten während des Betriebs keine starken Keimbelastungen des gebrühten Fleisches auf. Da nach dem Schritt des Brühens bei Einhaltung aller Hygienevorschriften die weiteren Verarbeitungsschritte die Keimbelastung nicht erneut erhöhen, führt eine Verringerung der Keimbelastung in der Brühphase zu einer geringeren Keimbelastung des Endprodukts, ohne dass Chemikalien in den weiteren Verarbeitungsschritten zur Reduktion von möglicherweise gesundheitsschädlichen Keimen eingesetzt werden müssen. Gleichzeitig werde bei einem erfindungsgemäßen Vorgehen nur geringe Mengen Frischwasser verbraucht und die Abwasserproduktion wird nicht erhöht. Es wird also durch diese Erfindung erreicht, dass zum Verzehr bestimmtes Fleisch mit einer konstant hohen Qualität und längerer Haltbarkeit ohne zusätzliche Belastung der Umwelt und kostengünstig produziert werden kann.

In einer Ausgestaltung betrifft die Erfindung auch ein Brühwassersystem zur Behandlung von Brühwasser in einem Schlachthof, wobei das Brühwassersystem aufweist: einen Brühbehälter, insbesondere umfassend einen Brühkessel oder eine Brühwanne, mit darin befindlichem Brühwasser zum Brühen von Schlachttieren, insbesondere Geflügel, wobei ein Brühwasserbehandlungssystem geeignet ist zur Entnahme von Brühwasser aus dem Brühbehälter mit einer ersten Temperatur zum Pasteurisieren des entnommenen Brühwassers und zum Zurückführen des Brühwassers in den Brühbehälter nach der Pasteurisierung, sodass die Keimkonzentration im Brühbehälter über einen vorgeschriebenen Zeitraum, zum Beispiel bis zu zehn oder bis zu zwölf Stunden auf einem in etwa gleichbleibenden Niveau zwischen 10³ und 10⁵ Keimen pro ml gehalten wird.

Diese Ausgestaltung der Erfindung nutzt aus, dass durch Einhalten von konstanten Grenzwerten für die Keimbelastung des Brühwassers auch die Belastung des Tierkörpers während der Brühphase in diesem Bereich gehalten werden kann. Da in den weiteren Verarbeitungsschritten bei Einhaltung aller vorgeschriebenen Hygienemaßnahmen keine neuen Quellen für eine erneute Erhöhung der Keimbelastung auftreten sollten, wird auch die Keimbelastung des Endprodukts in einem konstant niedrigen Bereich liegen. Hinzu kommt, dass so hergestellte Fleischprodukte unabhängig von zum Beispiel von Jahreszeit, von Wochentag, der Tageszeit oder der Menge der bereits zuvor verarbeiteten Tierkörper immer eine gleichbleibend geringe Keimbelastung innerhalb des vorgegebenen Bereichs zeigen. Es wird also durch diese Ausgestaltung der Erfindung ebenfalls erreicht, dass zum Verzehr bestimmtes Fleisch mit konstant hoher Qualität und längerer Haltbarkeit produziert werden kann.

In einer weiteren Ausgestaltung betrifft die Erfindung ein Brühwassersystem zum Behandeln von Brühwasser in einem Schlachthof, wobei das Brühwassersystem aufweist: einen Brühbehälter, insbesondere umfassend einen Brühkessel oder eine Brühwanne, in dem sich Brühwasser befindet zum Brühen von Schlachttieren, insbesondere von Geflügel, ein Brühwasserbehandlungssystem, geeignet zur Entnahme von Brühwasser aus dem Brühbehälter (und zum Pasteurisieren des entnommenen Brühwassers und zum Zurückführen des Brühwassers in den Brühbehälter nach der Pasteurisierung, wobei pasteurisiertes Brühwasser in den Brühbehälter zurückgeführt wird, und weiter geeignet zum Erwärmen des Brühwassers aus dem Brühbehälter nach Entnahme aus dem Brühbehälter in einer ersten Phase von einer ersten Brühwassertemperatur auf eine zweite Brühwassertemperatur, zum Erwärmen des auf die zweite Brühwassertemperatur erwärmten Brühwassers in einer zweiten Phase auf eine dritte Brühwassertemperatur und zum Halten des Brühwassers für einen definierten Zeitraum auf dieser dritten Brühwassertemperatur und zum Abkühlen in einer Abkühlphase des pasteurisierten Brühwassers in etwa auf die erste Brühwassertemperatur des Brühwassers im Brühbehälter und bei der Kühlung seine Wärmeenergie an das Brühwasser in der ersten Phase abzugeben und/oder an Frischwasser, welches dem Brühbehälter zugeführt wird und welches Brühwasser ersetzt, welches mit den Schlachttieren bei Verlassen des Brühbehälters mitgenommen wird.

Eine Ausgestaltung des zweiten Aspekts der Erfindung betrifft ein Verfahren zum Behandeln von Brühwasser in einem Schlachthof, wobei das Verfahren weiter aufweist: eine erste Phase, in der Brühwasser mit einer ersten Brühwassertemperatur auf eine zweite Brühwassertemperatur erhitzt wird, eine zweiten Phase, in der Brühwasser auf eine dritte Brühwassertemperatur erhitzt wird, wobei die dritte Brühwassertemperatur zum Pasteurisieren von Brühwasser geeignet ist, eine dritte Phase, in der das Brühwasser für einen bestimmten Zeitraum oberhalb der dritten Brühwassertemperatur gehalten wird, wobei der Zeitraum ausreicht, das Brühwasser zu pasteurisieren.

In einer weiteren alternativen Ausführungsform dieses Aspekts könnte die erste Phase des Erhitzens weggelassen werden und das Brühwasser mit der ersten Brühwassertemperatur direkt auf die dritte Brühwassertemperatur erhitzt werden. Dieser Aspekt der Erfindung nutzt aus, dass durch das Pasteurisieren des Brühwassers eine geringe Keimkonzentration im Brühwasser erreicht werden kann. Somit wird auch die Keimbelastung der im Brühwasser befindlichen Tierkörper reduziert, was, wie oben schon beschrieben, zu einer Reduktion der Keimbelastung im Endprodukt führt. Somit wird auch durch diesen Aspekt der Erfindung erreicht, dass zum Verzehr bestimmtes Fleisch mit konstant hoher Qualität und längerer Haltbarkeit produziert werden kann.

Eine weitere Ausführungsform der vorliegenden Erfindung betrifft ein Verfahren zur Herstellung von Geflügelprodukten, wobei das Verfahren die zusätzlichen Schritte aufweist: Brühen des Geflügels, wobei das Brühwasser in einem geschlossenen Brühwasserkreislauf gemäß dem oben beschriebenen Verfahren zur Behandlung von Brühwasser behandelt wird, Verarbeiten des gebrühten Geflügels zu einem Geflügelprodukt, wobei das Geflügel nach dem Verarbeitungsprozess eine Keimkonzentration von höchstens 10⁴ Keimen pro mg, bevorzugt 10³ Keime pro mg, aufweist.

Ein Geflügelprodukt, das mit einem der oben beschriebenen Verfahren hergestellt wird, weist nach dem Verarbeitungsprozess eine Keimkonzentration von höchstens 10⁴ Keimen pro mg auf. Bevorzugt weist das Geflügelprodukt eine Keimkonzentration von unter 10³ Keimen pro mg auf. Eine Vielzahl von Geflügelprodukten, die am gleichen Tag produziert wurden, weisen eine mittlere Keimkonzentration unter 10⁴ Keimen pro mg, bevorzugt unter 5*10³ Keimen pro mg auf, wobei die mittlere Keimkonzentration als Mittelwert aus zufälligen Stichproben der an einem Tag produzierten Geflügelprodukte berechnet wird.

Diesem Effekt der Erfindung liegt zugrunde, dass eine für jedes Endprodukt gleichbleibende Reduktion der Keimkonzentration auf dem Endprodukt, hier dem Geflügelprodukt, zu einer gleichbleibend hohen Qualität und Haltbarkeit des Geflügelproduktes führt.

Allen oben genannten Aspekten der Erfindung liegen dabei die folgenden Überlegungen der Erfinder zugrunde:
Nach dem Schlachten von Geflügel oder auch von Schweinen (oder anderen Nutztieren) ist es notwendig, die Tierkörper kurz zu erhitzen, um die Federkiele oder Borstenwurzeln, aus der Haut zu lösen und so das folgende Rupfen oder Enthaaren zu erleichtern. Der Vorgang des Erhitzens erfolgt meistens durch das Eintauchen der Tierkörper in ein warmes Wasserbad und wird dann "Brühen" genannt.

Bisher war es üblich, das Wasser, das zum Brühen verwendet wurde, im Folgenden Brühwasser genannt, in eine Brühwanne zu füllen, zu erhitzten und dann die frisch geschlachteten Tierkörper durch das Brühwasser zu ziehen. Da der Wasserverbrauch bei den modernen Produktionsverfahren in einer Großschlachterei bei einem kontinuierlichem Ersetzen des Brühwassers durch Frischwasser zu groß würde und außerdem zu einer Produktion von großen Mengen hochproblematischen Abwassers und entsprechenden Kosten für die Entsorgung bzw. eine starke Belastung der Umwelt durch dieses Abwasser führte, wird in den meisten Betrieben das Brühwasser nur einmal am Tag gewechselt. Nur kleinere Mengen Frischwasser werden kontinuierlich zugegeben, um Brühwasser zu ersetzen, das von den Tierkörpern aus der Brühwanne bzw. dem Brühbehälter aufgenommen und somit entfernt wurde.

Da die Tiere, wenn sie durch das Brühwasser gezogen werden, gerade erst geschlachtet sind und vorher im Allgemeinen nicht gesäubert werden, finden sich noch viel Dreck und Verunreinigungen am Tierkörper, wie zum Beispiel Kot, Stroh, Einstreu und dergleichen im Gefieder von Geflügel. Diese Verunreinigungen kommen beim Brühen mit dem Brühwasser in Kontakt und erhöhen so mit der Zeit den Verunreinigungsgrad des Brühwassers.

Die in der Brühwanne nötige starke Strömung verteilt schließlich die Verunreinigungen in der gesamten Brühwanne und somit auch auf zuvor saubere Tierkörper. Da das Brühwasser nur selten gewechselt wird, steigt die Verunreinigung des Brühwassers im Laufe einer Betriebsschicht, vom Anfahren der Maschine bei Schichtbeginn bis zum Runterfahren der Maschine zum Schichtende, immer weiter an. Da mit der Verunreinigung auch die Keimbelastung des Brühwassers im Laufe eines Produktionstages immer weiter ansteigt, hat das zur Folge, dass Schlachttiere, die am Schichtbeginn geschlachtet wurden, als die Verunreinigungen noch gering waren, eine geringere Keimbelastung aufweisen als Schlachttiere, die am Schichtende den gleichen Produktionsprozess durchlaufen haben. Da das Fleisch nach der Verarbeitung nicht mehr unterschieden werden kann, bestimmt die höchste Keimbelastung, die während einer Produktionsschicht aufgetreten ist, schließlich die Qualität und die Haltbarkeit aller Fleischprodukte.

Es konnte dabei festgestellt werden, dass, da im weiteren Verarbeitungsprozess die Keimbelastung ohne den Einsatz von Chemikalien nur geringfügig verringert werden kann, die Verunreinigung während der Brühphase die Qualität des späteren Fleischproduktes bestimmt. Diese Beobachtung liegt der vorliegenden Erfindung zugrunde.

Dadurch ergibt sich die erfindungsgemäße Überlegung, dass durch die Verringerung der Keimbelastung während der Brühphase die spätere Qualität und die Haltbarkeit des Fleischproduktes verbessert werden kann. Aus diesem Grund setzt das erfindungsgemäße System in der Brühphase an.

Das erfindungsgemäße System kann im Gegensatz zum bisherigen Stand der Technik eine gleichbleibend konstante und geringe Keimbelastung gewährleisten, ohne chemische Zusätze verwenden zu müssen, was zu einer gleichbleibend hohen Qualität und einer längeren Haltbarkeit des Fleisches führt, ohne die Umwelt durch zusätzlichen Wasserverbrauch und die Produktion von zusätzlichem Abwasser zu belasten. Gleichzeitig werden die Produktionskosten gering gehalten.

Eine erster Aspekt der Erfindung betrifft, wie oben bereits beschrieben, ein Brühwassersystem, wobei das Brühwasser außerhalb des Brühbehälters in einem Brühwasserbehandlungssystem pasteurisiert wird und dann dem Brühbehälter wieder zugeführt wird. Dabei bildet der Brühbehälter mit dem Brühwasserbehandlungssystem einen geschlossenen Brühwasserkreislauf.

Die Erfindung betrifft auch ein Brühwassersystem, wobei der Brühwasserkreislauf einen Wärmetauscher aufweist, wobei der Wärmetauscher umfasst: ein erstes Wärmetauschelement, das geeignet ist, Brühwasser aus dem Brühbehälter mit der ersten Brühwassertemperatur auf eine zweite Brühwassertemperatur zu erhitzen und ein zweites Wärmetauschelement, das geeignet ist, das Brühwasser aus dem ersten Wärmetauschelement auf eine dritte Brühwassertemperatur zu erhitzen, wobei die dritte Brühwassertemperatur zum Pasteurisieren von Brühwasser geeignet ist.

Dabei könnten das erste und zweite Wärmetauschelement als einzelne Bauelemente oder als ein Bauelement ausgestaltet sein. Zusätzlich kann diese Ausgestaltung auch so ausgestaltet werden, dass der Wärmetauscher nur das zweite Wärmetauschelement enthält und somit auf das erste Wärmetauschelement verzichtet wird. Außerdem kann das zweite Wärmetauschelement auch als reines Heizelement ausgestaltet sein. Die Ausgestaltung erlaubt es, das Brühwasser auf die benötigte Pasteurisationstemperatur zu erhitzen und bei dieser Temperatur so lange wie nötig zu halten. Durch Verwendung des Wärmetauschers mit einem ersten und einem zweiten Wärmetauschelement kann die Erwärmung des Brühwassers durch die Menge des durch den Wärmetauscher strömenden Brühwassers genau geregelt werden.

Weiter betrifft die Erfindung ein Brühwassersystem, wobei das erste Wärmetauschelement geeignet ist, das Brühwasser aus dem zweiten Wärmetauschelement auf die erste Brühwassertemperatur abzukühlen, wobei die erste Brühwassertemperatur zum Brühen von Schlachttieren, insbesondere Geflügel geeignet ist.

Ein Vorteil dieser Ausgestaltung liegt darin, dass durch die Verwendung des Brühwassers, das aus dem Brühbehälter stammt, zum Kühlen des pasteurisierten Brühwassers im ersten Wärmetauschelement, ein Teil der Energie, die für die Erwärmung des Brühwassers auf die Pasteurisierungstemperatur aufgewendet werden muss, zurückgewonnen werden kann. Dabei wird vorteilhafterweise das Brühwasser aus dem Brühkessel mit Hilfe des pasteurisierten Brühwassers vorgeheizt, bevor es in das zweite Wärmetauschelement gelangt und das pasteurisierte Brühwasser kann ohne zusätzliche Aufwendung von Energie zum Kühlen auf die zum Brühen nötige Temperatur herab gekühlt werden. Diese Ausgestaltung bietet also die Möglichkeit, den Energieverbauch des Brühwasserbehandlungssystems zu minimieren.

Bevorzugte Brühwassertemperaturen liegen für die erste Brühwassertemperatur zwischen 40°C und 62°C, insbesondere zwischen 45°C und 55°C, und/oder für die zweite Brühwassertemperatur zwischen 60°C und 80°C, insbesondere zwischen 65°C und 75°C, und/oder für die dritte Brühwassertemperatur, zwischen 70°C und 100°C, insbesondere zwischen 70°C und 90°C, bevorzugt zwischen 70°C und 75°C.

Die erste Brühwassertemperatur ist bevorzugt auch von der zu verarbeiteten Tierart abhängig, wobei die erste Brühwassertemperatur für Puten zwischen 57°C und 60°C liegt, die erste Brühwassertemperatur für Enten zwischen 59°C und 62°C und die erste Brühwassertemperatur für Schweine zwischen 54°C und 58°C, bevorzugt bei 56°C.

Eine Ausgestaltung der Temperaturen wie oben beschrieben erlaubt ein optimales Ergebnis bei der Pasteurisierung bei einer gleichzeitigen Minimierung des Energieverbrauchs. Die Einstellung der ersten Brühwassertemperatur innerhalb des oben genannten Bereichs erlaubt außerdem eine optimale Vorbereitung der Tierkörper auf das Rupfen bzw. Entfernen der Borsten. Bei Brühen von Geflügel, insbesondere Hühnern, ist weiter eine erste Brühwassertemperatur zwischen 50°C und 55°C, insbesondere von 53°C vorteilhaft.

Eine weitere Ausgestaltung der Ausführungsform betrifft ein Brühwassersystem, wobei eine Durchflussmenge des Brühwassers durch das zweite Wärmetauschelement derart eingestellt ist, dass das Brühwasser im zweiten Wärmetauschelement für eine Dauer von mindestens 10 Sekunden, insbesondere einer Dauer von zwischen 10 Sekunden und 1,5 Minuten, bevorzugt von 15 Sekunden eine zum Pasteurisieren geeignete Temperatur aufweist.

Eine Vorteil dieser Ausgestaltung ist, dass die Zeit, die bei der jeweiligen Pasteurisierungstemperatur nötig ist, durch die Durchflussmenge des Brühwassers durch den Wärmetauscher gesteuert werden kann, um immer eine optimale Pasteurisierung des Brühwassers zu erreichen.

Eine weitere Ausgestaltung der Ausführungsform betrifft ein Brühwassersystem, wobei das Brühwassersystem einen Heißwasserkreislauf aufweist, der mit dem zweiten Wärmetauschelement verbunden und dazu geeignet ist, die Temperatur des Brühwassers im zweiten Wärmetauschelement auf die dritte Brühwassertemperatur zu erhitzen.

Ein Vorteil dieser Ausgestaltung liegt darin, dass das Wasser im Heißwasserkreislauf bei der Erwärmung des Brühwassers nur einen Teil seiner Energie an das Brühwasser abgibt und deshalb bei jedem Durchlauf nur wenig Energie dem Wasser im Heißwasserkreislauf wieder zugeführt werden muss. Dadurch kann der Energieverbrauch des Systems weiter verringert werden. Bevorzugt wird das Wasser im Heißwasserkreislauf auf eine Temperatur zwischen 90°C und 100°C, bevorzugt auf 98°C eingestellt.

Eine weitere Ausgestaltung der Ausführungsform betrifft ein Brühwassersystem, wobei das Brühwassersystem eine Frischwasserzufuhr aufweist, die geeignet ist dem Brühwasserkreislauf Frischwasser zuzuführen, wobei die Frischwasserzufuhr mit dem ersten Wärmetauschelement derart verbunden ist, dass, bevor das Frischwasser dem Brühwasserkreislauf zugeführt wird, das Frischwasser auf die erste Brühwassertemperatur erhitzt wird.

Auch diese Ausgestaltung erlaubt als Vorteil eine Optimierung des Energieverbrauchs des gesamten Systems. Beim Brühen wird durch Wasser, das sich am Tierkörper, zum Beispiel im Gefieder oder an der Haut von Geflügel, sammelt, beständig ein Teil des Brühwassers aus dem Brühwasserkreislauf entnommen. Es muss daher beständig der Verlust von Brühwasser durch Hinzufügen von Frischwasser in den Brühwasserkreislauf ersetzt werden. Da das Frischwasser noch keine Keimbelastung aufweist ist es sinnvoll, das Frischwasser im Brühbehälter zuzusetzen. Durch eine Ausgestaltung wie oben beschrieben kann das Frischwasser durch Ausnutzung der überschüssigen Wärme aus dem bereits pasteurisierten Wasser ohne zusätzlichen Energieverbrauch auf die zum Brühen benötigte Temperatur erwärmt werden. Gleichzeitig kann das Frischwasser (und durch Einstellung dessen Temperatur) genutzt werden, um das pasteurisierte Brühwasser auf die gewünschte nötige Brühtemperatur abzukühlen.

Eine weitere Ausgestaltung der Ausführungsform betrifft ein Brühwassersystem, wobei Verbindungen zwischen dem Brühbehälter und dem Brühwasserbehandlungssystem, die zum Entnehmen und/oder Zuführen von Brühwasser in und/oder aus dem Brühbehälter geeignet sind, in einer vorbestimmten Höhe am Brühbehälter angebracht sind, wobei die vorbestimmte Höhe bestimmt wird, um zu verhindern, dass grobe Verunreinigungen, insbesondere Tierkörper, in das Brühwasserbehandlungssystem gelangen können.

Ein Vorteil dieser Ausführungsform ist es, dass grobe Feststoffe, wie zum Beispiel Federn, sich im Brühbehälter unterhalb der Brühwasserentnahme absetzen können und so nicht in das Brühwasserbehandlungssystem, das heißt die Rohrleitungen, gelangen können. Ein Einsatz von Filtern, die schnell verstopfen und deshalb oft gewechselt werden müssen, wird dadurch vermieden. Da das Wechseln von Filtern häufig eine Stilllegung der Produktion erfordert, was mit Produktionsverzögerungen und damit Gewinnausfällen einhergeht, ergibt sich aus der obigen Ausgestaltung außerdem eine Vermeidung von zusätzlichen Produktionskosten und Produktionsausfällen.

Eine weitere Ausgestaltung der Ausführungsform betrifft ein Brühwassersystem, wobei der Brühwasserkreislauf einen Speicherbehälter aufweist, der mit dem Brühbehälter verbunden ist und dazu geeignet ist, Schwankungen eines Wasserstands im Brühbehälter zu vermindern.

Ein Vorteil dieser Ausgestaltung besteht darin, dass der Speicherbehälter Brühwasser zwischenspeichern kann und somit bei einer Veränderung der Durchlaufmenge des Brühwassers durch den Brühwasserbehandlungskreislauf, zum Beispiel aufgrund einer Steigerung der Produktionsrate, kurzfristige Schwankungen im Brühbehälter vermieden werden können. Auf diese Weise wird sichergestellt, dass auch bei Veränderungen im Brühwasserbehandlungssystem die Schlachttiere immer wie vorgesehen gebrüht werden.

Eine weitere Ausgestaltung der Ausführungsform betrifft ein Brühwassersystem, wobei der Speicherbehälter eine Messvorrichtung, die geeignet ist, den Wasserstand im Brühbehälter zu messen, und eine Alarmeinheit aufweist, die bei einem Wasserstand, der nicht für das sichere Betreiben des Brühwassersystems geeignet ist, den Brühwasserkreislauf stoppt und ein Alarmsignal aussendet.

Es ist ein Vorteil, dass durch diese Ausgestaltung auch bei außergewöhnlichen Vorkommnissen, zum Beispiel einem Leck in einer der Leitungen oder dem Verstopfen einer der Leitungen, das System ausreichend sicher ist. Durch das Stoppen des Brühwasserkreislaufs bei zu niedrigem Wasserstand im Brühbehälter wird sichergestellt, dass die Schlachttiere nur dann weiter verarbeitet werden, wenn sie ausreichend gebrüht worden sind.

Eine weitere Ausgestaltung der Ausführungsform betrifft ein Brühwassersystem, wobei der Brühbehälter ein Brühwasserheizelement aufweist, das geeignet ist, das Brühwasser im Brühbehälter auf die erste Brühwassertemperatur zu erhitzen und/oder das Brühwasser während des Brühens der Schlachttiere im Brühbehälter auf der ersten Brühwassertemperatur zu halten.

Diese Ausgestaltung hat den Vorteil, dass das Brühwasser auch im Brühbehälter immer auf der notwendigen Brühtemperatur gehalten werden kann, auch wenn das Brühwasser zum Beispiel durch die kalten Tierkörper im Brühbehälter beständig gekühlt wird.

Eine weitere Ausgestaltung der Ausführungsform betrifft ein Brühwassersystem, wobei der Brühwasserkreislauf Rohre mit einem Innendurchmesser aufweist, der geeignet ist, das Brühwasser ungefiltert durch den Brühwasserkreislauf fließen zu lassen.

Bevorzugt wird ein Innendurchmesser der Rohre von mindestens 20mm, insbesondere zwischen 20mm und 80mm, bevorzugt 21mm.

Diese Ausgestaltung ist vorteilhaft, da wie oben schon erklärt, der Einsatz von Filtern im Brühwassersystem nachteilig ist und so sichergestellt wird, dass es zu keinen Verstopfungen innerhalb des Rohrsystems durch sich im Brühwasser befindliche Feststoffe, wie zum Beispiel Sand oder Federn, kommt. Gleichzeitig wird durch einen Rohrdurchmesser in dem oben genannten Bereich die Durchhitzung des Brühwassers sichergestellt und durch eine ausreichende Fließgeschwindigkeit sichergestellt, dass sich Feststoffe nicht im Rohr festsetzen können.

Eine weitere Ausgestaltung der Ausführungsform betrifft ein Brühwassersystem, wobei der Brühwasserkreislauf wenigstens einen Temperatursensor zum Messen einer Temperatur im Brühwasserkreislauf und eine Steuervorrichtung, insbesondere eine Frequenzpumpe, zum Steuern eines Durchflusses von Brühwasser durch den Brühwasserkreislauf aufweist, wobei die Steuervorrichtung den Durchfluss des Brühwassers auf Grund von Temperaturwerten, die von den Temperatursensoren bestimmt werden, steuert.

Ein Vorteil dieser Ausgestaltung ist, dass die Durchflussmengen durch das Brühwassersystem automatisch immer so gesteuert werden können, dass eine ausreichende Pasteurisierung des Brühwassers, zum Beispiel bei einer Änderung der Menge der verarbeiteten Tierkörper, sichergestellt werden kann. Auch Schwankungen der Temperatur des aus dem öffentlichen Wassernetz entnommenen Frischwassers können so abgefangen werden.

Eine weitere Ausgestaltung der Ausführungsform betrifft ein Brühwassersystem, wobei die Steuervorrichtung geeignet ist, den Durchfluss des Brühwassers durch das Brühwassersystem zu stoppen, wenn die erste, zweite oder dritte Brühwassertemperatur von einer entsprechenden vorbestimmten Temperatur abweicht.

Bevorzugt definieren die vorbestimmten Temperaturen einen vorbestimmten Temperaturbereich für die erste, zweite und dritte Temperatur, sodass die Steuervorrichtung den Durchfluss stoppt, wenn eine der Temperaturen außerhalb des Temperaturbereiches liegt. Der Temperaturbereich umfasst bevorzugt eine Abweichung von der bevorzugten ersten, zweiten oder dritten Temperatur von weniger als ± 3°C, insbesondere von weniger als ± 1°C. Auch diese Ausgestaltung betrifft die Sicherheit des Betriebs des Systems und hat den Vorteil, dass bei Vorfällen wie einer Verstopfung der Rohrleitungen oder einem Leck der Betrieb der Anlage rechtzeitig gestoppt wird, um das Problem beheben zu können, bevor Schaden an dem Brühwassersystem entstehen kann. So kann auch vermieden werden, dass nicht ausreichend pasteurisiertes Brühwasser oder Brühwasser mit der falschen Brühtemperatur zurück in den Brühbehälter gelangt.

Eine weitere Ausgestaltung der Ausführungsform betrifft ein Brühwassersystem, wobei das Brühwassersystem weiter ein Reinigungssystem aufweist, wobei das Reinigungssystem eine Reinigungsflüssigkeit umfasst und geeignet ist, nach dem Betrieb des Brühwassersystems an den Brühwasserkreislauf angeschlossen zu werden, um den Brühwasserkreislauf zu reinigen.

Die Reinigungsflüssigkeit kann eine Wassermischung mit 2% Natronlauge, eine Wassermischung mit 2% Peressigsäure oder ein anderes zugelassenes chemisches oder biologisches Reinigungsmittel sein. Ein Vorteil dieser Ausgestaltung ist, dass es ermöglicht wird, das Brühwassersystem in regelmäßigen Abständen zu reinigen und so ein Festsetzen von Verschmutzungen und Keimen im Brühwassersystem selber zu verhindern. So kann das Brühwasser nach dem Pasteurisieren nicht durch verdreckte Leitungen erneut mit Keimen in Kontakt kommen.

Bei den im Brühwassersystem gebrühten Schlachttieren handelt es sich bevorzugt um Geflügel, insbesondere Hühner, Hähnchen, Broiler, Enten, Puten und Gänse. Weiter ist das erfindungsgemäße Brühwassersystem auch dafür geeignet, Schlachttiere wie Schweine zu verarbeiten, insbesondere zu brühen, um das Entfernen der Borsten zu erleichtern.

Des Weiteren wird die technische Aufgabe durch ein Verfahren zum Betrieb des oben beschrieben Brühwassersystems gelöst. Bei diesem Verfahren wird das Brühwasser kontinuierlich aus dem Brühbehälter entnommen, im Brühwasserbehandlungssystem pasteurisiert und nach der Pasteurisierung dem Brühbehälter wieder zugeführt, wobei der Schritt des Pasteurisierens weiter die Schritte umfasst: Leiten des Brühwassers nach der Entnahme aus dem Brühbehälter durch einen erstes Wärmetauschelement, Erhitzen des Brühwassers im ersten Wärmetauschelement von einer ersten Brühwassertemperatur auf eine zweite Brühwassertemperatur, Leiten des Brühwassers aus dem ersten Wärmetauschelement in ein zweites Wärmetauschelement, Erhitzen des Brühwassers im zweiten Wärmetauschelement auf eine dritte Brühwassertemperatur, wobei die dritte Brühwassertemperatur zum Pasteurisieren von Brühwasser geeignet ist, Zurückführen des Brühwassers aus dem zweiten Wärmetauschelement in das erste Wärmetauschelement, Abkühlen des Brühwassers auf die erste Brühwassertemperatur, wobei die erste Brühwassertemperatur zum Brühen von Schlachttieren geeignet ist.

Dieser Aspekt hat den Vorteil, dass bei der Erwärmung des Brühwassers im ersten Wärmetauscher gleichzeitig das Brühwasser aus dem zweiten Wärmetauscher, das bereits pasteurisiert ist, auf die zum Brühen vorgesehene Temperatur gekühlt werden kann. Diese Verbindung der beiden Wärmetauschelemente ermöglicht es, das Brühwasser auf möglichst energiesparende Weise zu erwärmen und wieder abzukühlen.

Eine weitere Ausgestaltung betrifft ein Verfahren, das weiter den Schritt des Zuführens von Frischwasser aus einem Frischwasserkreislauf in den Brühbehälter aufweist, wobei der Schritt des Zuführens von Frischwasser, das Durchfließen des Frischwassers durch das erste Wärmetauschelement und das Erhitzen des Frischwassers auf eine erste Frischwassertemperatur aufweist, wobei die erste Frischwassertemperatur zum Brühen von Schlachttieren geeignet ist.

Auch bei dieser Ausgestaltung ergibt sich der Vorteil, dass keine (unnötige) zusätzliche Energie benötigt wird, um das benötigte Frischwasser von der Temperatur, die es bei der Entnahme aus dem öffentlichen Wassernetz hat, auf die zum Brühen vorgesehene Temperatur zu erwärmen, da für diesen Vorgang die überschüssige Energie des pasteurisierten Wassers verwendet werden kann.

Eine weitere Ausgestaltung betrifft ein Verfahren, wobei nur die Menge an Frischwasser dem System zugeführt wird, die für die Aufrechterhaltung eines konstanten Wasserstandes in dem Brühbehälter notwendig ist.

Da nur genau so viel Frischwasser zugeführt wird wie nötig ist, um den Wasserstand im Brühbehälter konstant zu halten, kann der Wasserverbrauch des Brühwassersystems auf das Nötigste beschränkt werden.

Eine weitere Ausgestaltung betrifft ein Verfahren, das weiter den Schritt des Reinigens des Brühwasserkreislaufs nach dem Betrieb des Brühwasserkreislaufs aufweist, wobei der Schritt des Reinigens weiter die Schritte aufweist: Einbringen von Reinigungsflüssigkeit, die geeignet ist den Brühwasserkreislauf zu reinigen, in den Brühwasserkreislauf, Erhitzen der Reinigungsflüssigkeit im Brühwasserkreislauf, Durchfließen der Reinigungsflüssigkeit durch den Brühwasserkreislauf für einen Zeitraum, der geeignet ist, den Brühwasserkreislauf mittels der Reinigungsflüssigkeit zu reinigen und Ablassen der Reinigungsflüssigkeit aus dem Brühwasserkreislauf und Nachspülen des Brühwasserkreislaufs mittels Frischwasser.

Durch das Reinigen des Brühwasserkreislaufs wie in dieser Ausgestaltung wird sichergestellt, dass sich Verunreinigungen und Keime nicht im Rohrsystem festsetzen können und somit das Brühwasser nach dem Pasteurisieren nicht bei Durchlaufen der Rohre erneut verunreinigt werden kann.

Eine weitere Ausgestaltung betrifft ein Verfahren, wobei ein Durchfluss von Brühwasser durch den Brühwasserkreislauf von einer Steuervorrichtung derart gesteuert wird, dass das Brühwasser wenigstens alle fünf Stunden, insbesondere alle vier Stunden, bevorzugt jede Stunde pasteurisiert wird.

Dabei ist in einer Ausführungsform der Durchlauf durch das Brühwasserbehandlungssystem abhängig von der Gesamtmenge an Brühwasser, das sich im Brühwassersystem befindet. Bevorzugt ist das System so ausgestaltet, dass das gesamte im Brühwassersystem befindliche Brühwasser je nach Verkeimung mindestens alle vier Stunden durch den Wärmetauscher strömt und pasteurisiert wird. So könnte in einem Brühwassersystem, das 20000 Liter aufweist der Durchlauf durch das Brühwasserbehandlungssystem zum Beispiel 5000i/h betragen. Diese Ausgestaltung hat den Vorteil, dass eine Keimbelastung des Brühwassers auf einem Niveau gehalten wird, das dem Niveau der Keimbelastung des Brühwassers in einem System entspricht, in dem jede Stunde z. B. 15-50%, vorzugsweise 25% des Brühwassers ausgetauscht werden.

Ein oben bereits beschriebene Ausgestaltung der Erfindung betrifft ein Brühwassersystem, das die Keimkonzentration im Brühwasser innerhalb eines vorbestimmten Bereichs konstant hält.

In einer ebenfalls oben beschriebenen Ausgestaltung des erfindungsgemäßen Verfahrens wird das Brühwasser aus dem Brühbehälter mit einer ersten Brühwassertemperatur, die zum Brühen geeignet ist, in einer ersten Phase auf eine zweite Brühwassertemperatur erhitzt, in einer zweiten Phase auf die zum Pasteurisieren geeignete Brühwassertemperatur erhitzt und während einer dritten Phase wird diese oder eine höhere Temperatur gehalten.

Eine Ausgestaltung dieses Verfahrens betrifft ein Verfahren, wobei das Verfahren nach der dritten Phase eine vierte Phase aufweist, in der das Brühwasser von der dritten Temperatur auf die erste Temperatur abgekühlt wird, wobei die erste Temperatur zum Brühen von Schlachttieren, insbesondere Geflügel, geeignet ist.

Diese Ausgestaltung stellt sicher, dass nur Brühwasser mit einer Temperatur, die zum Brühen von Schlachttieren geeignet ist in den Brühbehälter gelangt und so Schwankungen der Temperatur im Brühbehälter vermieden werden können.

Dabei weist die dritte Phase bevorzugt mindestens eine Dauer von z. B. 14 Sekunden, insbesondere eine Dauer zwischen 14 Sekunden und 1,5 Minuten auf, bevorzugt eine Dauer von 15 Sekunden. Weiter bevorzugt hängt die Dauer der ersten, zweiten, dritten Phase und/oder vierten Phase von der Durchlaufmenge des Brühwassers durch das Brühwasserbehandlungssystem ab. Bevorzugt hängt die Dauer der ersten, zweiten, dritten oder vierten Phase von der Keimkonzentration im Brühbehälter ab, wobei die Dauer der Phasen so eingestellt ist, dass die Keimkonzentration in einem vorbestimmten Konzentrationsbereich liegt. Die in dieser Ausgestaltung genannten Zeiträume ermöglichen ein vollständiges Pasteurisieren des Brühwassers bei angemessenen Durchlaufzeiten.

Eine Ausgestaltung eines weiteren Aspekts der Erfindung betrifft ein Verfahren, bei dem Geflügel mit in einem Brühwasserkreislauf pasteurisierten Brühwasser gebrüht wird und danach so zu einem Geflügelprodukt weiterverarbeitet wird, dass das Geflügelprodukt nach der Verarbeitung eine Keimkonzentration von höchstens 10⁴ Keimen pro mg, bevorzugt 10³ Keime pro mg, aufweist.

Eine weitere Ausgestaltung betrifft ein Verfahren, bei dem Geflügel mit in einem Brühwasserkreislauf pasteurisierten Brühwasser gebrüht wird und danach so zu einem Geflügelprodukt weiterverarbeitet wird, dass eine Vielzahl von Geflügelprodukten, die am gleichen Tag produziert werden, eine mittlere Keimkonzentration von höchstens 10⁴ Keimen pro mg, bevorzugt höchstens 5*10³ Keimen pro mg aufweisen, wobei die mittlere Keimkonzentration als Mittelwert aus zufälligen Stichproben der an einem Tag produzierten Geflügelprodukte berechnet wird.

Ein Geflügelprodukt, das nach dem oben beschriebenen Verfahren hergestellt wird weist nach der Verarbeitung eine Keimkonzentration von höchstens 10⁴ Keimen pro mg auf. Bevorzugt weist das Geflügelprodukt eine Keimkonzentration von höchstens 10³ Keimen pro mg auf. Eine Vielzahl von Geflügelprodukten, die am gleichen Tag produziert werden, weisen eine mittlere Keimkonzentration von höchstens 10⁴ Keimen pro mg, bevorzugt höchstens 5*10³ Keimen pro mg auf, wobei die mittlere Keimkonzentration als Mittelwert aus zufälligen Stichproben der an einem Tag produzierten Geflügelprodukte berechnet wird.

Im Folgenden wird die vorliegende Erfindung anhand von in den Figuren dargestellten Ausführungsbeispielen weiter illustriert und erläutert.
- Fig. 1: zeigt schematisch ein Ausführungsbeispiel eines erfindungsgemäßen Systems.
- Fig. 2: zeigt schematisch ein Verlaufsdiagramm für ein erfindungsgemäßes Verfahren.
- Fig. 3: zeigt schematisch ein Verlaufsdiagramm einer Ausführungsform eines erfindungsgemäßen Verfahrens.
- Fig. 4: zeigt schematisch ein Verlaufsdiagramm für einen Aspekt eines erfindungsgemäßen Verfahrens.
- Fig. 5: zeigt ein schematisches Diagramm eines Keimkonzentrationsverlaufs mit der Zeit für ein erfindungsgemäßes und ein nicht erfindungsgemäßes Brühwassersystem.
- Fig. 6: zeigt ein schematisches Diagramm eines erfindungsgemäßen Temperaturverlaufs von Brühwasser in einem Brühwasserbehandlungssystem mit der Zeit.

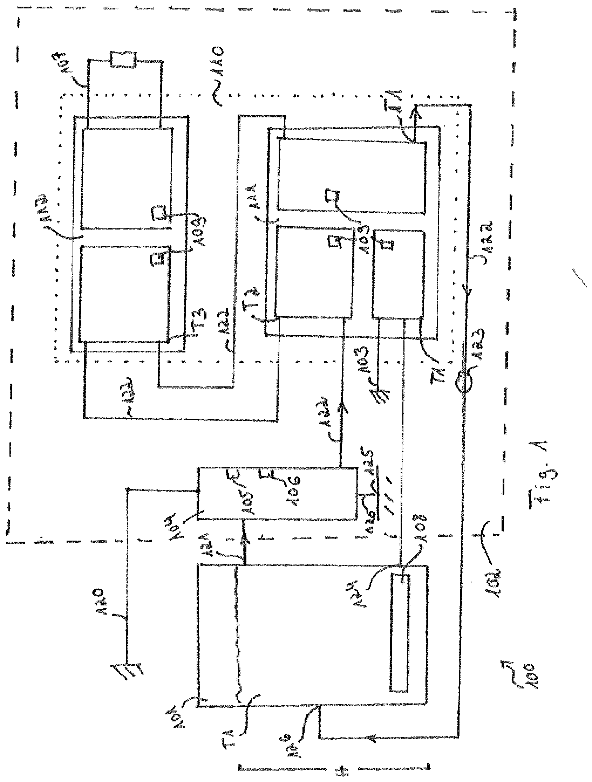

Fig. 1 zeigt schematisch eine beispielhafte Ausführungsform eines erfindungsgemäßen Brühwassersystems 100, das zum Brühen von Hähnchen geeignet ist. In einer anderen Ausführungsform könnte das Brühwassersystem 100 auch geeignet sein für das Brühen von anderem Geflügel wie Enten, Gänsen oder Puten oder zum Brühen von Schweinen.

Das Brühwassersystem 100 umfasst einen Brühbehälter 101 und ein Brühwasserbehandlungssystem 102. Dabei handelt es sich bei dem mit Brühwasser gefüllten Brühbehälter 101 um eine Brühwanne, insbesondere um ein Brühbecken, wobei die geschlachteten Hähnchen mittels einer Aufhängevorrichtung, an der die Hähnchenkörper z. B. an den Ständern aufgehängt werden, durch den Brühbehälter 101 gezogen werden können. In einer bevorzugten Ausführungsform umfasst das Brühwassersystem 10000 bis zu 20000 Liter Brühwasser.

Der Brühbehälter 101 umfasst weiter ein Brühwasserheizelement 108 und einen Brühwasserzulauf 126 und einen Brühwasserablauf 121 und ist bis zu einer Höhe H mit Brühwasser gefüllt. Außerdem weist der Brühbehälter 101 eine Frischwasserzuleitung 124 auf.

Das Brühwasserbehandlungssystem 102 weist einen Wärmetauscher 110 und einen Speicherbehälter 104 auf. Der Wärmetauscher 110 umfasst ein erstes Wärmetauschelement 111 und ein zweites Wärmetauschelement 112 und Temperatursensoren 109. Der Speicherbehälter 104 wiederum umfasst eine Messvorrichtung 105, eine Alarmeinheit 106 und einen Zufluss und Abfluss für das Reinigungssystem 120.

im Folgenden soll anhand von Fig. 1 die Funktionsweise einer erfindungsgemäßen Ausführungsform des Brühwassersystems näher erläutert werden.

Im Brühbehälter 101 befindet sich Brühwasser mit einer ersten Brühwassertemperatur von 48°C bis 52°C. Die frisch geschlachteten Hähnchen werden an den Ständern in die Haken eines Förderbandes gehängt und durch das Brühwasser gezogen. Dabei sind die Dimensionen des Brühbehälters 101 so ausgelegt, dass die gewünschte Menge Hähnchen pro Zeit so durch das Brühwasser gezogen werden kann, dass die Hähnchen beim Verlassen des Brühbehälters 101 optimal auf den folgenden Vorgang des Rupfens vorbereitet sind. Jeder Hähnchenkörper verbringt dabei bevorzugt mindestens 3,5 bis 4 Minuten im Brühwasser.

In einer anderen Ausführungsform könnte der Brühbehälter 101 auch für das Brühen von Enten, Gänsen, Puten oder Schweinen ausgelegt sein, wobei in diesen Ausführungsformen die Brühtemperatur den jeweiligen Tieren angepasst ist. In einer Ausführungsform für Puten liegt die Brühtemperatur zwischen 57°C und 59,9°C, in einer Ausführungsform für Enten liegt die Brühtemperatur zwischen 59,5°C und 61,5°C und in einer Ausführungsform für Schweine liegt die Brühtemperatur bei ca. 56°C.

Das Brühwasser im Brühbehälter 101 wird kontinuierlich durch Strömungspumpen bewegt, um das Brühwasser im Brühbehälter 101 gut zu durchmischen und damit alle Hähnchenkörper beim Durchlaufen des Brühbehälters 101 immer gut von Brühwasser umflossen werden. Da die Hähnchenkörper kälter als das Brühwasser sind, sorgt das Brühwasserheizelement 108 dafür, dass das Brühwasser von der vorgegebene Brühtemperatur trotz der Abkühlung des Brühwassers durch die Hähnchenkörper nur um weniger als 1°C abweicht.

Der Ausfluss 121 des Brühwassers aus dem Brühbehälter 101 ist in einer Höhe H über dem Boden des Brühbehälters 101 angebracht. Dadurch können sich grobe Verunreinigungen wie Dreck, Federn, Sand, aber auch Tierkörper oder Tierkörperteile am Boden des Brühbehälters 101 absetzen und werden nicht mit der Strömung in den Ausfluss 121 und damit in das Brühwasserbehandlungssystem 102 gespült.

Der Ausfluss 121 des Brühbehälters 101 ist mit dem Speicherbehälter 104 verbunden. In diesem Speicherbehälter 104 wird das Brühwasser zwischengespeichert bevor es durch einen Ausfluss des Speicherbehälters 104 weiter zum Wärmetauscher 110 geleitet wird.

In einer anderen Ausführungsform könnte der Wärmetauscher 110 auch direkt mit dem Brühbehälter 101 verbunden sein und der Speicherbehälter 104 könnte keinen Ausfluss besitzen oder in einer weiteren Ausführungsform könnte der Speicherbehälter 104 nicht benötigt werden.

Am Speicherbehälter 104 ist eine Messvorrichtung 105 vorgesehen, die den Wasserstand im Speicherbehälter 104 misst und anhand dieser Messung bestimmt, wie hoch der Wasserstand im Brühbehälter 101 ist. In dieser Ausführungsform sind der Speicherbehälter 104 und der Brühbehälter 101 so verbunden, dass es einen eindeutigen Zusammenhang zwischen dem Stand des Brühwassers im Brühbehälter 101 und dem Stand des Brühwassers im Speicherbehälter 104 gibt. In einer anderen Ausführungsform kann die Messvorrichtung 105 auch am Brühbehälter 101 angebracht sein und direkt den Wasserstand im Brühbehälter 101 messen.

Die Alarmeinheit 106 bestimmt, ob der von der Messvorrichtung 105 bestimmte Brühwasserstand im Brühbehälter 101 unterhalb einer vorgegebenen Sicherheitsgrenze liegt. Wenn das der Fall ist, befindet sich für den Betrieb des Brühwassersystems 100 zu wenig Brühwasser im Brühbehälter 101 und die Alarmeinheit 106 stoppt die Zufuhr von Brühwasser aus dem Brühbehälter 101 zum Brühwasserbehandlungssystem 102 und sendet einen Alarm aus. Erst wenn das Problem, das zu einem niedrigen Wasserstand geführt hat, behoben und ein Wasserstand oberhalb der Sicherheitsgrenze wiederhergestellt ist, wird die Zufuhr wieder freigegeben. In einer anderen Ausführungsform könnte sich die Alarmeinheit 106 auch am Brühbehälter 101 befinden oder außerhalb des Brühwassersystems durch eine elektronische Fernüberwachung realisiert sein.

Der Wärmetauscher 110 ist über ein Rohr 122 mit dem Speicherbehälter 104 verbunden. Das heißt, Brühwasser aus dem Speicherbehälter 104 mit einer ersten Temperatur T1, die der Brühtemperatur entspricht, wird zunächst im ersten Wärmetauschelement 111 auf eine zweite Temperatur T2 vorgeheizt. Zum Vorheizen wird das bereits pasteurisierte und noch heiße Brühwasser verwendet. Das Brühwasser aus dem Speicherbehälter 104 und das bereits pasteurisierte Brühwasser, das noch in etwa die Pasteurisierungstemperatur aufweist, werden dabei gegenläufig durch ein Doppelrohr mit einem Innen- und einem Außenrohr geleitet, sodass das pasteurisierte Brühwasser einen Teil seiner Wärmeenergie zum Vorheizen an das Brühwasser aus dem Speicherbehälter 104 abgibt. Nach Durchlaufen des ersten Wärmetauschelements 111 hat das Brühwasser eine Temperatur zwischen 60°C und 80°C, vorzugsweise von 70°C.

Das erste Wärmetauschelement 111 ist so mit dem zweiten Wärmetauschelement 112 verbunden, dass das Brühwasser aus dem ersten Wärmetauschelement 111 im zweiten Wärmetauschelement 112 auf eine dritte Temperatur T3, die zum Pasteurisieren geeignet ist, erhitzt werden kann. Zum Aufheizen des Brühwassers auf die dritte Temperatur T3 wird heißes Wasser aus einem Heißwasserkreislauf 107 verwendet. Dabei werden das Brühwasser und das Heißwasser aus dem Heißwasserkreislauf 107 gegenläufig durch Doppelrohre geleitet, sodass das Heißwasser einen Teil seiner Wärmeenergie an das Brühwasser abgeben kann.

Das Heißwasser im Heißwasserkreislauf 107 hat eine Temperatur von bis zu 100°C, vorzugsweise zwischen 95°C und 100°C, und kühlt sich während des Durchlaufens des zweiten Wärmetauschelements 112 auf bis zu 80°C ab. Durch entsprechende Heizvorrichtungen wird das Heißwasser immer wieder auf die gewünschte Temperatur erhitzt.

Das zweite Wärmetauschelement 112 ist so ausgestaltet, dass das Brühwasser nach dem Erhitzen auf die dritte Brühtemperatur, die zum Pasteurisieren geeignet ist, diese Temperatur oder eine höhere Temperatur für einen Zeitraum von vorzugsweise 15 Sekunden beibehält. In dieser Zeit wird ein Großteil z. B. mehr als 50-90% aller Keime im Brühwasser abgetötet und das Brühwasser pasteurisiert. In einer anderen Ausführungsform kann der Zeitraum auch 1,5 Minuten oder 45 Sekunden betragen. Die zum Pasteurisieren geeignete dritte Brühwassertemperatur beträgt in dieser Ausführungsform zwischen 70°C und 75°C, bevorzugt 73°C. in einer anderen Ausführungsform kann sie aber auch 86°C oder zwischen 85°C und 88°C betragen.

In einer anderen Ausführungsform ist es auch möglich, das zweite Wärmetauschelement 112 durch eine beliebige Vorrichtung zum Erhitzen von Brühwasser zu ersetzen, zum Beispiel durch einen Wasserbehälter, in den ein Heizelement, wie eine Heizschlange, eingebaut ist. Des Weiteren könnte in einer weiteren Ausführungsform der Heißwasserkreislauf 107 auch ersetzt werden, zum Beispiel durch eine Heißschlange, die am zweiten Wärmetauschelement 112 so befestigt ist, dass das Brühwasser auf die gewünschte Temperatur erhitzt werden kann.

Das pasteurisierte Brühwasser wird nach Durchlaufen des zweiten Wärmetauschelements 112 dann wie oben beschrieben zurück in das erste Wärmetauschelement 111 geleitet. Dabei wird das pasteurisierte Brühwasser im ersten Wärmetauschelement 111 abgekühlt. In der hier beschriebenen Ausführungsform wird das pasteurisierte Brühwasserdurch das Brühwasser aus dem Speicherbehälter 104 und zusätzlich durch Frischwasser aus einer Frischwasserzufuhr 103 gekühlt. In einer anderen Ausführungsform könnte das pasteurisierte Brühwasser nur durch das Brühwasser aus dem Speicherbehälter 104 oder nur durch das Frischwasser gekühlt werden.

Die Frischwasserzufuhr 103 dient dazu, Brühwasser, das beim Entnehmen der Hähnchen aus dem Brühbehälter 101 im Gefieder der Hähnchen verbleibt und somit aus dem Brühwasserkreislauf verloren geht, zu ersetzen. Das Frischwasser wird dem öffentlichen Wassernetz entnommen und kann eine Frischwassertemperatur zwischen 5°C und 15°C aufweisen. Um das Frischwasser vor der Zufuhr zum Brühbehälter 101 auf die Brühtemperatur bzw. die erste Brühwassertemperatur T1 von 53°C zu erhitzen und gleichzeitig das pasteurisierte Brühwasser auf die erste Brühwassertemperatur T1 abzukühlen, wird das Frischwasser ebenfalls durch das erste Wärmetauschelement 111 geleitet. Durch die Frischwasserzuleitung 124 wird das Frischwasser dann dem Brühbehälter 101 nach dem Erhitzen zugeführt.

Alternativ kann in einer anderen Ausführungsform das Frischwasser auch ohne vorherige Erhitzung, also ohne durch das Wärmetauschelement 111 geleitet zu werden, dem Wasserkreislaus an einer beliebigen Stelle innerhalb des Wasserkreislaufs direkt zugeführt werden.

Das pasteurisierte Brühwasser, das im ersten Wärmetauschelement 111 auf die Brühtemperatur abgekühlt ist, wird am Ende das Brühwasserkreislaufs durch den Brühwasserzulauf 126 dem Brühbehälter 101 wieder zugeführt.

Gesteuert wird der Durchlauf durch das Brühwassersystem 100 von ein oder mehreren Steuervorrichtungen 123, insbesondere Frequenzpumpen, die in das Rohrsystem 122 des Brühwasserbehandlungssystems 102 integriert sind. Der Durchlauf des Brühwassers durch das Brühwassersystem 100 wird dabei anhand der von den Temperatursensoren 109 gemessenen Brühwassertemperaturen gesteuert. So kann beispielweise die Durchlaufmenge von Brühwasser erhöht werden, wenn die Temperatursensoren 109 Temperaturwerte anzeigen, die oberhalb eines vorbestimmten ersten Grenzwertes liegen und verringert werden, wenn die Temperatursensoren 109 Temperaturwerte zeigen, die unterhalb eines zweiten Grenzwertes liegen.

In einer anderen Ausführungsform umfasst der Brühbehälter 101 einen Keimkonzentrationssensor und der Durchfluss durch das Brühwassersystem 100 wird abhängig von der vom Keimkonzentrationssensor gemessenen Keimkonzentration bestimmt. Dabei wird das Brühwassersystem 100 so gesteuert, dass bei einer Erhöhung der Keimkonzentration die Durchlaufmenge erhöht wird und bei einer ausreichend niedrigen Keimkonzentration die Durchlaufmenge verringert wird. Dadurch kann sichergestellt werden, dass sich die Keimkonzentration im Brühbehälter 101 immer in einem gewünschten Bereich befindet. Bevorzugt liegt die Keimkonzentration im Brühbehälter konstant in einem Bereich zwischen 10³ und 10⁵ Keimen pro ml.

In dieser Ausführungsform erfolgt der Betrieb des Brühwassersystems 100 in Betriebsschichten, wobei eine Betriebsschicht des Brühwassersystems 100 vom Hochfahren des Systems bis zum Runterfahren des Systems dauert.

Nach dem Schichtende, also dem Endes der Betriebsschicht des Brühwassersystems 100 wird das Reinigungssystem 120 an das Brühwassersystem 100 angeschlossen und das Brühwasser durch den Abfluss 125 des Reinigungssystems 120 in die Kanalisation/Kläranlage abgelassen. Danach wird das Brühwassersystem 100 mittels einer geeigneten Reinigungsflüssigkeit gereinigt. Dabei wird das Brühwasserbehandlungssystem 102 zum Erhitzen der Reinigungsflüssigkeit verwendet. Durch den Abfluss 125 wird nach der Reinigung die Reinigungsflüssigkeit aus dem Brühwassersystem 100 entfernt.

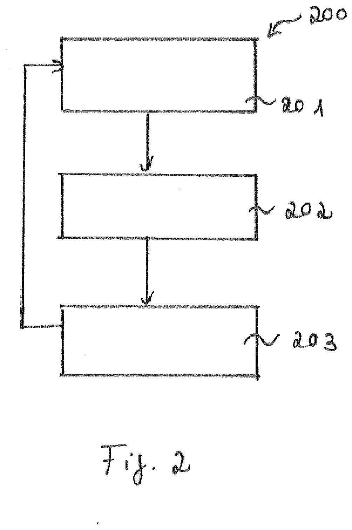

Fig. 2 zeigt schematisch ein Verfahren 200 zum Betreiben eines erfindungsgemäßen Brühwassersystems 100. im ersten Schritt 201 wird das Brühwasser aus dem Brühbehälter 101 entnommen und dem Brühwasserbehandlungssystem 102 zugeführt. Im zweiten Schritt 202 wird das Brühwasser im Brühwasserbehandlungssystem 102 pasteurisiert und im dritten Schritt 203 wird das pasteurisierte Brühwasser wieder zum Brühbehälter 101 zurückgeführt.

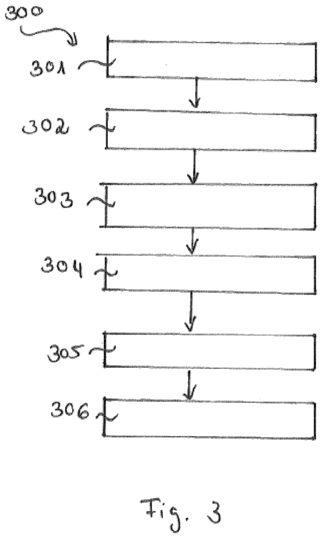

Fig. 3 zeigt schematisch einen detaillierten Ablauf 300 der Schritte, die in einer bevorzugten Ausführungsform vom Pasteurisierungsschritt 202 umfasst sind. Zunächst wird in dieser Ausführungsform das Brühwasser im Schritt 301 aus dem Brühbehälter 101 durch das erste Wärmetauschelement 111 geleitet. Dabei wird das Brühwasser im ersten Wärmetauschelement 111 im Schritt 302 auf die zweite Brühwassertemperatur T1 vorgeheizt. Das vorgeheizte Brühwasser wird im Schritt 303 in das zweite Wärmetauschelement 112 geleitet und im zweiten Wärmetauschelement 112 im Schritt 304 auf die dritte Brühwassertemperatur T3, also die Pasteurisierungstemperatur, erhitzt. Im Schritt 305 wird das pasteurisierte Brühwasser in das erste Wärmetauschelement 111 zurückgeleitet und dort im Schritt 306 wieder auf die Brühtemperatur, das heißt die erste Brühwassertemperatur T1, abgekühlt.

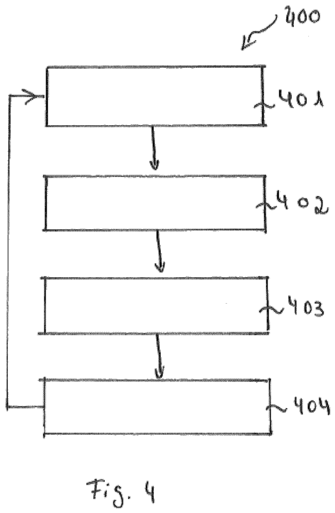

Fig. 4 zeigt ein erfindungsgemäßes Verfahren 400 zur Zufuhr von Frischwasser zum Brühwassersystem 100. Dabei wird im ersten Schritt 401 Frischwasser aus dem Frischwasserversorgungsnetz entnommen und der Frischwasserzufuhr 103 zugeführt. Im Schritt 402 wird das Frischwasser durch das erste Wärmetauschelement 111 geleitet und dabei im Schritt 403 auf die Brühtemperatur, also die erste Brühwassertemperatur T1 erhitzt. Das so erhitzte Frischwasser wird im Schritt 404 dem Brühbehälter 101 zugeführt.

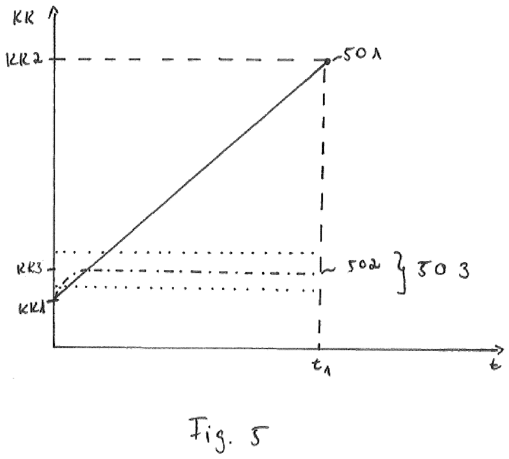

Eine Alternativlösung der formulierten technischen Aufgabe wird in Fig. 5 schematisch dargestellt. Fig. 5 zeigt schematisch den Verlauf einer Keimkonzentration KK im Brühwasser während einer Betriebsschicht, wobei die Betriebsschicht die Schichtdauer t1 aufweist, die in dieser Ausführungsform 10 Stunden beträgt. Die Kurve 501 bildet den Verlauf einer Keimkonzentration in einem Brühbehälter 101 nach dem bisherigen Stand der Technik ab. Die Kurve 502 zeigt einen Verlauf der Keimkonzentration im Brühbehälter 101, mit dem die oben formulierte Aufgabe gelöst werden kann.

Die Kurve 501 zeigt, dass in einem Brühbehälter nach dem Stand der Technik die Konzentration der Keime von einem ersten geringen Konzentrationswert KK1 im Laufe des Betriebs auf einen zweiten höheren Konzentrationswert KK2 ansteigt, sodass die Keimkonzentration im Brühwasser am Ende der Betriebsschicht im Brühbehälter 101 weit höher ist als am Anfang. Wie in der Einleitung erklärt heißt das, dass auch die Qualität der Fleischprodukte während der Betriebsschicht abnimmt und die gesamte Produktion nach der schlechteren Qualität am Schichtende bewertet werden muss.

Die Kurve 502 zeigt hingegen einen Verlauf der Keimkonzentration, bei dem eine gleichbleibend hohe Qualität der Fleischprodukte sichergestellt werden kann. Somit lässt sich durch Einstellen der Keimkonzentration auf einen möglichst konstanten Konzentrationswert KK3, der innerhalb des Bereiches 503 liegt, die Aufgabe, ein Fleischprodukt mit einer konstant hohen Qualität zu erzeugen, realisieren. In einer alternativen Ausführungsform liegt der Konzentrationswert KK3 wenigstens unterhalb eines Grenzwertes.

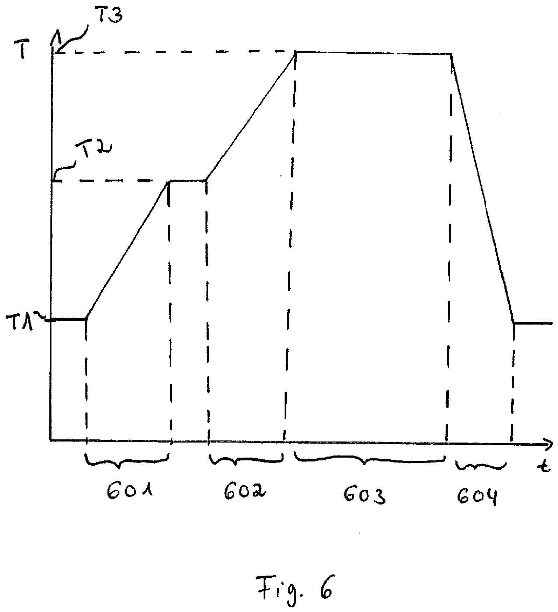

Eine weitere Alternativlösung der formulierten technischen Aufgabe wird in Fig. 6 schematisch in einer Ausführungsform dargestellt. Fig. 6 zeigt schematisch die Temperatur von Brühwasser, das das Brühwasserbehandlungssystem 102 durchläuft, mit der Zeit, wobei dieser Temperaturverlauf die der Erfindung zu Grunde liegende Aufgabe löst. Dabei ist im Folgenden zu bedenken, dass, wenn von Brühwasser gesprochen wird, nicht die gesamte Menge des im Brühwassersystem 100 befindlichen Brühwassers gemeint ist, sondern nur ein Teil des Brühwassers, der das Brühwasserbehandlungssystem 102 durchläuft.

Wie Fig. 6 zeigt, hat dieser Teil des Brühwassers zunächst die Brühtemperatur, also die erste Brühwassertemperatur T1, die zum Brühen der Schlachttiere geeignet ist. In einer ersten Phase 601 wird die Temperatur des Brühwassers auf die zweite Brühwassertemperatur T2 erhöht. In einer zweiten Phase 602 wird die Temperatur des Brühwassers auf die dritte Brühwassertemperatur T3 erhöht, wobei die dritte Brühwassertemperatur zum Pasteurisieren des Brühwassers geeignet ist. Die dritte Brühwassertemperatur wird dann während einer dritten Phase 603 beibehalten. Die Dauer der dritten Phase 603 wird dabei so eingestellt, dass eine vollständige Pasteurisierung des Brühwassers erreicht wird. In einer vierten Phase 604 wird das Brühwasser wieder auf die Brühtemperatur herunter gekühlt.

In einer weiteren Ausführungsform kann die erste Phase auch ausgelassen werden und das Brühwasser direkt von der Brühtemperatur auf die dritte Brühwassertemperatur T3 erhitzt werden.

Eine weitere Lösungsmöglichkeit der technischen Aufgabe besteht darin, direkt die höchste noch akzeptable Keimkonzentration auf dem Hähnchenprodukt zu definieren und ein Brühwassersystem so einzustellen, dass diese Keimkonzentration nicht überschritten wird. Zusätzlich zu der Keimreduktion durch das Brühwassersystem können auch weitere Schritte ausgeführt werden, um die Keime weiter zu reduzieren, zum Beispiel durch ein weiteres Abwaschen der Hähnchen. Da sich bei der Verwendung eines erfindungsgemäßen Systems die Keimkonzentration an den Hähnchen in dem im Gegensatz zum Stand der Technik niedrigen Bereich von nicht über 10⁴ Keimen pro mg befindet, ist es möglich, entweder das Abwaschen der Tierkörper zu reduzieren und damit Wasser und Produktionskosten einzusparen oder durch das Abwaschen die Keimkonzentration noch weiter zu verringern.

Allen Fleischprodukten, die mit einem der obigen Systeme bzw. Verfahren hergestellt sind, ist dabei gemein, dass sie am Ende der Verarbeitungskette eine Keimkonzentration von höchstens 10⁴ Keimen pro mg aufweisen, wobei diese obere Grenze für die Keimkonzentration unabhängig von der Tageszeit oder Produktionsmenge eingehalten werden kann. Das heißt, in einer zufälligen Charge Fleischprodukte liegt die Keimkonzentration aller Produkte höchstens bei 10⁴ Keimen pro mg, wobei der Mittelwert der Charge bei höchstens 5*10³ Keimen pro mg liegt. Desweiteren liegen die Keimkonzentrationen der Charge in einem engen Bereich zwischen 5*10² und 10⁴ Keimen pro mg. Im Gegensatz dazu würde eine zufällige Charge Fleischprodukte, die nach dem bisherigen Stand der Technik hergestellt wurde, eine sehr breite Verteilung von Keimkonzentrationen aufweisen.

Bei jeder der oben beschrieben Ausführungsformen wird die Keimkonzentration auf einem Fleischprodukt schon während des Produktionsprozesses gering gehalten und somit ein Fleischprodukt mit einer hohen und gleichbleibenden Qualität sichergestellt.

## Patentansprüche

1. Brühwassersystem (100) zum Behandeln von Brühwasser in einem Schlachthof zur Verarbeitung von Schlachttieren, z. B. Hühner, Hähnchen, Broiler, Enten und Gänse, wobei das Brühwassersystem (100) aufweist:
- einen Brühbehälter (101), insbesondere einen Brühkessel oder eine Brühwanne, mit Brühwasser zum Brühen von Schlachttieren, insbesondere Geflügel,
- ein Brühwasserbehandlungssystem (102) geeignet zur Entnahme von Brühwasser mit einer ersten Brühwassertemperatur (T1) aus dem Brühbehälter (101), zum Pasteurisieren des entnommenen Brühwassers und zum Zurückführen des Brühwassers in den Brühbehälter (101) nach der Pasteurisierung,
wobei der Brühbehälter (101) und das Brühwasserbehandlungssystem (102) einen geschlossenen Brühwasserkreislauf bilden, der einen Wärmetauscher (110) aufweist, **dadurch gekennzeichnet, dass** der Wärmetauscher (110)
- ein erstes Wärmetauschelement (111) umfasst, das geeignet ist, Brühwasser aus dem Brühbehälter (101) mit der ersten Brühwassertemperatur (T1) auf eine zweite Brühwassertemperatur (T2) zu erhitzen, und
- ein zweites Wärmetauschelement (112), das geeignet ist, das Brühwasser aus dem ersten Wärmetauschelement (111) auf eine dritte Brühwassertemperatur (T3) zu erhitzen, wobei die dritte Brühwassertemperatur (T3) zum Pasteurisieren von Brühwasser geeignet ist, wobei
- das erste Wärmetauschelement (111) geeignet ist, das Brühwasser aus dem zweiten Wärmetauschelement (112) auf die erste Brühwassertemperatur (T1) abzukühlen, wobei die erste Brühwassertemperatur (T1) zum Brühen von Schlachttieren, insbesondere Geflügel, geeignet ist.

2. Brühwassersystem (100) nach Anspruch 1, wobei die erste Brühwassertemperatur (T1) zwischen 40°C und 62°C, insbesondere zwischen 45°C und 55°C, und/oder die zweite Brühwassertemperatur (T2) zwischen 60°C und 80°C, insbesondere zwischen 65°C und 75°C, und/oder die dritte Brühwassertemperatur (T3) zwischen 70°C und 30 100°C, insbesondere zwischen 70°C und 90°C, bevorzugt zwischen 70°C und 75°C, liegt.

3. Brühwassersystem (100) nach einem der Ansprüche 1 bis 2, wobei eine Durchflussmenge des Brühwassers durch das zweite Wärmetauschelement (112) derart eingestellt ist, dass das Brühwasser im zweiten Wärmetauschelement (112) für eine Dauer von mindestens 10 Sekunden, insbesondere für eine Dauer von zwischen 15 Sekunden und 1,5 Minuten, bevorzugt von 15 Sekunden, eine zum Pasteurisieren geeignete Temperatur aufweist.

4. Brühwassersystem (100) nach einem der Ansprüche 1 bis 3, wobei das Brühwassersystem (100) einen Heißwasserkreislauf (107) aufweist, der mit dem zweiten Wärmetauschelement (112) verbunden und dazu geeignet ist, die Temperatur des Brühwassers im zweiten Wärmetauschelement (112) auf die dritte Brühwassertemperatur (T3) zu erhitzen.

5. Brühwassersystem (100) nach einem der vorherigen Ansprüche, wobei das Brühwassersystem (100) eine Frischwasserzufuhr (103) aufweist, die geeignet ist, dem Brühwasserkreislauf Frischwasser zuzuführen, wobei die Frischwasserzufuhr (103) mit dem ersten Wärmetauschelement (111) derart verbunden ist, dass, bevor das Frischwasser dem Brühwasserkreislauf zugeführt wird, das Frischwasser auf die erste Brühwassertemperatur (T1) erhitzt wird.

6. Brühwassersystem (100) nach einem der vorherigen Ansprüche, wobei Verbindungen (121, 126) zwischen dem Brühbehälter (101) und dem Brühwasserbehandlungssystem (102), die zum Entnehmen und/oder Zuführen von Brühwasser in und/oder aus dem Brühbehälter (101) geeignet sind, in einer vorbestimmten Höhe (H) am Brühbehälter (101) angebracht sind, wobei die vorbestimmte Höhe (H) bestimmt wird, um zu verhindern, dass grobe Verunreinigungen, insbesondere Tierkörper, in das Brühwasserbehandlungssystem (102) gelangen können.

7. Brühwassersystem (100) nach einem der vorherigen Ansprüche, der Brühwasserkreislauf einen Speicherbehälter (104) aufweist, der mit dem Brühbehälter (101) verbunden ist und dazu geeignet ist, Schwankungen eines Wasserstands im Brühbehälter (101) zu vermindern.

8. Brühwassersystem (100) nach Anspruch 7, wobei der Speicherbehälter (104) eine Messvorrichtung (105), die geeignet ist, den Wasserstand im Brühbehälter (101) zu messen, und eine Alarmeinheit (106) aufweist, die bei einem Wasserstand, der nicht für das sichere Betreiben des Brühwassersystems (100) geeignet ist, den Brühwasserkreislauf stoppt und ein Alarmsignal aussendet.

9. Brühwassersystem (100) nach einem der vorherigen Ansprüche, wobei der Brühbehälter (101) ein Brühwasserheizelement (108) aufweist, das geeignet ist, das Brühwasser im Brühbehälter (101) auf die erste Brühwassertemperatur (T1) zu erhitzen und/oder das Brühwasser während des Brühens der Schlachttiere im Brühbehälter (101) auf der ersten Brühwassertemperatur (T1) zu halten.

10. Brühwassersystem (100) nach einem der vorherigen Ansprüche, wobei der Brühwasserkreislauf Rohre (122) mit einem Innendurchmesser aufweist, der geeignet ist das Brühwasser ungefiltert durch den Brühwasserkreislauf fließen zu lassen und z. B.
der Innendurchmesser der Rohre (122) mindestens 20 mm, insbesondere zwischen 20 mm und 80 mm, bevorzugt 21 mm, beträgt.

11. Brühwassersystem (100) nach einem der vorherigen Ansprüche, wobei der Brühwasserkreislauf wenigstens einen Temperatursensor (109) zum Messen einer Temperatur im Brühwasserkreislauf und eine Steuervorrichtung (123), insbesondere eine Frequenzpumpe, zum Steuern eines Durchflusses von Brühwasser durch den Brühwasserkreislauf aufweist, wobei die Steuervorrichtung (123) den Durchfluss des Brühwassers auf Grund von Temperaturwerten, die von den Temperatursensoren (109) bestimmt werden, steuert.

12. Brühwassersystem (100) nach Anspruch 11, wobei die Steuervorrichtung (123) geeignet ist, den Durchfluss des Brühwassers durch das Brühwassersystem (100) zu stoppen, wenn die erste, zweite oder dritte Brühwassertemperatur (T1, T2, T3) von einer entsprechenden vorbestimmten Temperatur abweicht.

13. Brühwassersystem (100) nach einem der vorherigen Ansprüche, wobei das Brühwassersystem (100) weiter ein Reinigungssystem (120) aufweist, wobei das Reinigungssystem (120) eine Reinigungsflüssigkeit umfasst und geeignet ist, nach dem Betrieb des Brühwassersystems (100) an den Brühwasserkreislauf angeschlossen zu werden, um den Brühwasserkreislauf zu reinigen.

14. Brühwassersystem (100) nach Anspruch 1,
wobei pasteurisiertes Brühwasser in den Brühbehälter (101) zurückgeführt wird, und weiter geeignet zum Erwärmen des Brühwassers aus dem Brühbehälter (101) nach Entnahme aus dem Brühbehälter (101) in einer ersten Phase (601) von einer ersten Brühwassertemperatur (T1) auf eine zweite Brühwassertemperatur (T2), zum Erwärmen des auf die zweite Brühwassertemperatur (T2) erwärmten Brühwassers in einer zweiten Phase (602) auf eine dritte Brühwassertemperatur (T3) und zum Halten des Brühwassers für einen definierten Zeitraum auf dieserdritten Brühwassertemperatur (T3) und zum Abkühlen in einer Abkühlphase (604) des pasteurisierten Brühwassers in etwa auf die erste Brühwassertemperatur (T1) des Brühwassers im Brühbehälter (101) und bei der Kühlung seine Wärmeenergie an das Brühwasser in der ersten Phase (601) abzugeben und/oder an Frischwasser, welches dem Brühbehälter (101) zugeführt wird und welches Brühwasser ersetzt, welches mit den Schlachttieren bei Verlassen des Brühbehälters (101) mitgenommen wird.

15. Brühwassersystem (100) nach Anspruch 1, wobei
das Brühwasserbehandlungssystem (102) dazu geeignet ist, die Keimkonzentration im Brühbehälter (101) über einen vorgeschriebenen Zeitraum auf einem in etwa gleichbleibendem Niveau von zwischen 10³ und 10⁵ Keimen pro ml zu halten.

16. Verfahren zur Behandlung von Brühwasser in einem Schlachthof, wobei das Verfahren die Schritte umfasst:
- Entnehmen von Brühwasser aus einem Brühbehälter (101),
- Pasteurisieren von Brühwasser, und
- Zurückführen von Brühwasser in den Brühbehälter (101) nach der Pasteurisierung, wobei die Schritte des Entnehmens, Pasteurisierens und Zurückführens einen geschlossenen Brühwasserkreislauf bilden,
**dadurch gekennzeichnet, dass** der Schritt des Pasteurisierens weiter die Schritte umfasst:
- Leiten des Brühwassers nach der Entnahme aus dem Brühbehälter (101) durch ein erstes Wärmetauschelement (111),
- Erhitzen des Brühwassers im ersten Wärmetauschelement (111) von einer ersten Brühwassertemperatur (T1) auf eine zweite Brühwassertemperatur (T2),
- Leiten des Brühwassers aus dem ersten Wärmetauschelement (111) in ein zweites Wärmetauschelement (112),
- Erhitzen des Brühwassers im zweiten Wärmetauschelement (112) auf eine dritte Brühwassertemperatur (T3), wobei die dritte Brühwassertemperatur (T3) zum Pasteurisieren von Brühwasser geeignet ist,
- Zurückführen des Brühwassers aus dem zweiten Wärmetauschelement (112) in das erste Wärmetauschelement (111),
- Abkühlen des Brühwassers auf die erste Brühwassertemperatur (T1), wobei die erste Brühwassertemperatur (T1) zum Brühen von Schlachttieren geeignet ist.

17. Verfahren nach Anspruch 16, das weiter den Schritt des Zuführens von Frischwasser aus einem Frischwasserkreislauf (103) in den Brühbehälter (101) aufweist, wobei der Schritt des Zuführens von Frischwasser das Durchfließen des Frischwassers durch das erste Wärmetauschelement (111) und das Erhitzen des Frischwassers auf eine erste Frischwassertemperatur (T1) aufweist, wobei die erste Frischwassertemperatur zum Brühen von Schlachttieren geeignet ist.

18. Verfahren nach einem der Ansprüche 16 oder 17, das weiter den Schritt des Reinigens des Brühwasserkreislaufs nach dem Betrieb des Brühwasserkreislaufs aufweist,
wobei der Schritt des Reinigens weiter die Schritte aufweist:
- Einbringen von Reinigungsflüssigkeit, die geeignet ist, den Brühwasserkreislauf zu reinigen, in den Brühwasserkreislauf,
- Erhitzen der Reinigungsflüssigkeit im Brühwasserkreislauf,
- Durchfließen der Reinigungsflüssigkeit durch den Brühwasserkreislauf für einen Zeitraum, der geeignet ist, den Brühwasserkreislauf mittels der Reinigungsflüssigkeit zu reinigen, und
- Ablassen der Reinigungsflüssigkeit aus dem Brühwasserkreislauf und Nachspülen des Brühwasserkreislaufs mittels Frischwasser und/oder z. B. ein Durchfluss von Brühwasser durch den Brühwasserkreislaufs von einer Steuervorrichtung (123) derart gesteuert wird, dass eine bestimmte Menge (z. B. 25%) Brühwasser wenigstens einmal in der Stunde pasteurisiert wird.

19. Verfahren nach Anspruch 16, wobei das Verfahren aufweist:
- eine erste Phase (601), in der Brühwasser mit einer ersten Brühwassertemperatur (T1) auf eine zweite Brühwassertemperatur (T2) erhitzt wird,
- eine zweite Phase (602), in der Brühwasser auf eine dritte Brühwassertemperatur (T3) erhitzt wird, wobei die dritte Brühwassertemperatur (T3) zum Pasteurisieren von Brühwassers geeignet ist,
- eine dritte Phase (603), in der das Brühwasser für einen bestimmten Zeitraum oberhalb der dritten Brühwassertemperatur (T3) gehalten wird, wobei der Zeitraum ausreicht, das Brühwasser zu pasteurisieren und das Verfahren nach der dritten Phase (603) eine vierte Phase (604) aufweist, in der das Brühwasser von der dritten Temperatur auf die erste Temperatur abgekühlt wird, wobei die erste Temperatur zum Brühen von Schlachttieren, insbesondere Geflügel, geeignet ist.

20. Verfahren zur Herstellung von Geflügelprodukten, wobei das Verfahren die Schritte aufweist:
- Brühen des Geflügels, wobei das Brühwasser gemäß dem Verfahren nach Anspruch 17 behandelt wird,
- Verarbeiten des gebrühten Geflügels zu einem Geflügelprodukt, wobei jedes der Geflügelprodukte unabhängig von Wochentag oder Tageszeit nach dem Verarbeitungsprozess durchgehend eine Keimkonzentration von höchstens 10⁴, bevorzugt höchstens 10³ Keimen pro mg aufweist.

## Claims

1. Scalding water system (100) for treating scalding water in a slaughterhouse for processing slaughtered animals, for example, hens, chickens, broilers, ducks and geese,
wherein the scalding water system (100) has:
- a scalding container (101), in particular a scalding vessel or scalding tub, having scalding water for scalding slaughtered animals, in particular poultry,
- a scalding water treatment system (102) which is suitable for removing scalding water at a first scalding water temperature (T1) from the scalding container (101), for pasteurising the removed scalding water and for returning the scalding water into the scalding container (101) after the pasteurisation,
wherein the scalding container (101) and the scalding water treatment system (102) form a closed scalding water circuit which has a heat exchanger (110),
**characterised in that** the heat exchanger (110)
- comprises a first heat exchange element (111) which is suitable for heating scalding water from the scalding container (101) at a first scalding water temperature (T1) to a second scalding water temperature (T2), and
- a second heat exchange element (112) which is suitable for heating scalding water from the first heat exchange element (111) to a third scalding water temperature (T3), wherein the third scalding water temperature (T3) is suitable for pasteurising scalding water, wherein
- the first heat exchange element (111) is suitable for cooling the scalding water from the second heat exchange element (112) to the first scalding water temperature (T1), wherein the first scalding water temperature (T1) is suitable for scalding slaughtered animals, in particular poultry.

2. Scalding water system (100) according to claim. 1, wherein the first scalding water temperature (T1) is between 40°C and 62°C, in particular between 45°C and 55°C, and/or the second scalding water temperature (T2) is between 60°C and 80°C, in particular between 65°C and 75°C, and/or the third scalding water temperature (T3) is between 70°C and 30 100°C, in particular between 70°C and 90°C, preferably between 70°C and 75°C.

3. Scalding water system (100) according to any one of claims 1 to 2, wherein a throughflow quantity of the scalding water is adjusted by the second heat exchange element (112) in such a manner that the scalding water in the second heat exchange element (112), for a duration of at least 10 seconds, in particular for a duration between 15 seconds and 1.5 minutes, preferably of 15 seconds, has a temperature which is suitable for pasteurisation.

4. Scalding water system (100) according to any one of claims 1 to 3, wherein the scalding water system (100) has a hot water circuit (107) which is connected to the second heat exchange element (112) and which is suitable for heating the temperature of the scalding water in the second heat exchange element (112) to the third scalding water temperature (T3).

5. Scalding water system (100) according to any one of the preceding claims, wherein the scalding water system (100) has a fresh water supply (103) which is suitable for supplying fresh water to the scalding water circuit, wherein the fresh water supply (103) is connected to the first heat exchange element (111) in such a manner that, before the fresh water is supplied to the scalding water circuit, the fresh water is heated to the first scalding water temperature (T1).

6. Scalding water system (100) according to any one of the preceding claims, wherein connections (121, 126) between the scalding container (101) and the scalding water treatment system (102), which are suitable for removing and/or supplying scalding water to and/or from the scalding container (101), are fitted at a predetermined height (H) on the scalding container (101), wherein the predetermined height (H) is determined in order to prevent coarse impurities, in particular animal bodies, from being able to reach the scalding water treatment system (102).

7. Scalding water system (100) according to any one of the preceding claims, wherein the scalding water circuit has a storage container (104) which is connected to the scalding container (101) and which is suitable for reducing fluctuations of a water level in the scalding container (101).

8. Scalding water system (100) according to claim 7, wherein the storage container (104) has a measurement apparatus (105) which is suitable for measuring the water level in the scalding container (101) and an alarm unit (106) which, at a water level which is not suitable for the safe operation of the scalding water system (100), stops the scalding water circuit and transmits an alarm signal.

9. Scalding water system (100) according to any one of the preceding claims, wherein the scalding container (101) has a scalding water heating element (108) which is suitable for heating the scalding water in the scalding container (101) to the first scalding water temperature (T1) and/or for keeping the scalding water at the first scalding water temperature (T1) during the scalding of the slaughtered animals in the scalding container (101).

10. Scalding water system (100) according to any one of the preceding claims, wherein the scalding water circuit has pipes (122) having an inner diameter which is suitable for allowing the scalding water to flow in an unfiltered state through the scalding water circuit and, for example,
the inner diameter of the pipes (122) is at least 20 mm, in particular between 10 mm and 80 mm, preferably 21 mm.

11. Scalding water system (100) according to any one of the preceding claims, wherein the scalding water circuit has at least one temperature sensor (109) for measuring a temperature in the scalding water circuit and a control apparatus (123), in particular a frequency pump, for controlling a throughflow of scalding water through the scalding water circuit, wherein the control apparatus (123) controls the throughflow of the scalding water on the basis of temperature values which are determined by the temperature sensors (109).

12. Scalding water system (100) according to claim 11, wherein the control apparatus (123) is suitable for stopping the throughflow of the scalding water through the scalding water system (100) when the first, second or third scalding water temperature (T1, T2, T3) deviates from a corresponding predetermined temperature.

13. Scalding water system (100) according to any one of the preceding claims, wherein the scalding water system (110) further has a cleaning system (120), wherein the cleaning system (120) comprises a cleaning fluid and is suitable, after operating the scalding water system (100), for being connected to the scalding water circuit in order to clean the scalding water circuit.

14. Scalding water system (100) according to claim 1,
wherein pasteurised scalding water is returned to the scalding container (101) and is further suitable for heating the scalding water from the scalding container (101) after removal from the scalding container (101) in a first phase (601) from a first scalding water temperature (T1) to a second scalding water temperature (T2), for heating the scalding water which has been heated to the second scalding water temperature (T2) in a second phase (602) to a third scalding water temperature (T3) and for keeping the scalding water for a defined period of time at this third scalding water temperature (T3) and for cooling in a cooling phase (604) of the pasteurised scalding water substantially to the first scalding water temperature (T1) of the scalding water in the scalding container (101) and, during cooling, for discharging its thermal energy to the scalding water in the first phase (601) and/or to fresh water which is supplied to the scalding container (101) and which replaces scalding water which is carried with the slaughtered animals when leaving the scalding container (101).

15. Scalding water system (100) according to claim 1, wherein the scalding water treatment system (102) is suitable for keeping the germ concentration in the scalding container (101) over a prescribed period of time at a substantially consistent level between 10³ and 10⁵ germs per ml.

16. Method for treating scalding water in a slaughterhouse, wherein the method comprises the steps of:
- removing scalding water from a scalding container (101),
- pasteurising scalding water, and
- returning scalding water to the scalding container (101) after the pasteurisation, wherein the steps of removing, pasteurising and returning form a closed scalding water circuit,
**characterised in that** the step of pasteurisation further comprises the steps of:
- directing the scalding water after removal from the scalding container (101) through a first heat exchange element (111),
- heating the scalding water in the first heat exchange element (111) from a first scalding water temperature (T1) to a second scalding water temperature (T2),
- directing the scalding water from the first heat exchange element (111) into a second heat exchange element (112),
- heating the scalding water in the second heat exchange element (112) to a third scalding water temperature (T3), wherein the third scalding water temperature (T3) is suitable for pasteurising scalding water,
- returning the scalding water from the second heat exchange element (122) to the first heat exchange element (111),
- cooling the scalding water to the first scalding water temperature (T1), wherein the first scalding water temperature (T1) is suitable for scalding slaughtered animals.

17. Method according to claim 16, which further has the step of supplying fresh water from a fresh water circuit (103) to the scalding container (101), wherein the step of supplying fresh water has the throughflow of the fresh water through the first heat exchange element (11) and the heating of the fresh water to a first fresh water temperature (T1), wherein the first fresh water temperature is suitable for scalding slaughtered animals.

18. Method according to either claim 16 or claim 17, which further has the step of cleaning the scalding water circuit after operation of the scalding water circuit,
wherein the step of cleaning further has the steps of:
- introducing cleaning fluid which is suitable for cleaning the scalding water circuit into the scalding water circuit,
- heating the cleaning fluid in the scalding water circuit,
- passing the cleaning fluid through the scalding water circuit for a period of time which is suitable for cleaning the scalding water circuit by means of the cleaning fluid, and
- discharging the cleaning fluid from the scalding water circuit and flushing the scalding water circuit by means of fresh water and/or, for example, a throughflow of scalding water through the scalding water circuit is controlled by a control apparatus (123) in such a manner that a specific quantity (for example, 25%) of scalding water is pasteurised at least once per hour.

19. Method according to claim 16, wherein the method has:
- a first phase (601) in which scalding water at a first scalding water temperature (T1) is heated to a second scalding water temperature (T2),
- a second phase (602) in which scalding water is heated to a third scalding water temperature (T3), wherein the third scalding water temperature (T3) is suitable for pasteurising scalding water,
- a third phase (603) in which the scalding water is kept for a specific time period above the third scalding water temperature (T3), wherein the time period is sufficient to pasteurise the scalding water and the method after the third phase (603) has a fourth phase (604) in which the scalding water is cooled from the third temperature to the first temperature, wherein the first temperature is suitable for scalding slaughtered animals, in particular poultry.

20. Method for producing poultry products, wherein the method has the steps of:
- scalding the poultry, wherein the scalding water is treated according to the method according to claim 17,
- processing the scalded poultry to form a poultry product, wherein each of the poultry products regardless of the day of the week or the time of day after the processing process continuously has a germ concentration of a maximum of 10⁴, preferably a maximum of 10³ germs per mg.

## Revendications

1. Système d'eau d'échaudage (100) destiné à traiter de l'eau d'échaudage dans un abattoir pour transformer des animaux de boucherie, par exemple des poules, des poulets, des poulets de chair, des canards et des oies, dans lequel le système d'eau d'échaudage (100) présente :
- un contenant d'échaudage (101), en particulier une chaudière d'échaudage ou une cuve d'échaudage, avec de l'eau d'échaudage pour échauder des animaux de boucherie, en particulier des volailles,
- un système de traitement d'eau d'échaudage (102) adapté pour prélever, du contenant d'échaudage (101), de l'eau d'échaudage à une première température d'eau d'échaudage (T1), pour pasteuriser l'eau d'échaudage prélevée et pour ramener l'eau d'échaudage dans le contenant d'échaudage (101) après la pasteurisation,
dans lequel le contenant d'échaudage (101) et le système de traitement d'eau d'échaudage (102) forment un circuit d'eau d'échaudage fermé, qui présente un échangeur de chaleur (110),
**caractérisé en ce que** l'échangeur de chaleur (110)
- comprend un premier élément d'échange de chaleur (111), qui est adapté pour chauffer de l'eau d'échaudage provenant du contenant d'échaudage (101) présentant la première température d'eau d'échaudage (T1) à une deuxième température d'échaudage (T2), et
- un deuxième élément d'échange de chaleur (112), qui est adapté pour réchauffer l'eau d'échaudage provenant du premier élément d'échange de chaleur (111) à une troisième température d'eau d'échaudage (T3), dans lequel la troisième température d'eau d'échaudage (T3) est adaptée pour pasteuriser de l'eau d'échaudage, dans lequel
- le premier élément d'échange de chaleur (111) est adapté pour refroidir l'eau d'échaudage provenant du deuxième élément d'échange de chaleur (112) à la première température d'eau d'échaudage (T1), dans lequel la première température d'eau d'échaudage (T1) est adaptée pour échauder des animaux de boucherie, en particulier des volailles.

2. Système d'eau d'échaudage (100) selon la revendication 1, dans lequel la première température d'eau d'échaudage (T1) est comprise entre 40 °C et 62 °C, en particulier entre 45 °C et 55 °C, et/ou la deuxième température d'eau d'échaudage (T2) est comprise entre 60 °C et 80 °C, en particulier entre 65 °C et 75 °C, et/ou la troisième température d'eau d'échaudage (T3) est comprise entre 70 °C et 30 100 °C, en particulier entre 70 °C et 90 °C, de manière préférée entre 70 °C et 75 °C.

3. Système d'eau d'échaudage (100) selon l'une quelconque des revendications 1 à 2, dans lequel un écoulement traversant de l'eau d'échaudage est réglé de telle manière par le deuxième élément d'échange de chaleur (112) que l'eau d'échaudage présente dans le deuxième élément d'échange de chaleur (112), pendant une durée d'au moins 10 secondes, en particulier pendant une durée entre 15 secondes et 1,5 minute, de manière préférée de 15 secondes, une température adaptée pour la pasteurisation.

4. Système d'eau d'échaudage (100) selon l'une quelconque des revendications 1 à 3, dans lequel le système d'eau d'échaudage (100) présente un circuit d'eau très chaude (107), qui est relié au deuxième élément d'échange de chaleur (112) et est adapté pour chauffer la température de l'eau d'échaudage dans le deuxième élément d'échange de chaleur (112) à la troisième température d'eau d'échaudage (T3).

5. Système d'eau d'échaudage (100) selon l'une quelconque des revendications précédentes, dans lequel le système d'eau d'échaudage (100) présente une arrivée d'eau fraîche (103), qui est adaptée pour amener de l'eau fraîche au circuit d'eau d'échaudage, dans lequel l'arrivée d'eau fraîche (103) est reliée au premier élément d'échange de chaleur (111) de telle manière que, avant que l'eau fraîche ne soit amenée au circuit d'eau d'échaudage, l'eau fraîche est chauffée à la première température d'eau d'échaudage (T1).

6. Système d'eau d'échaudage (100) selon l'une quelconque des revendications précédentes, dans lequel des raccords (121, 126) entre le contenant d'échaudage (101) et le système de traitement d'eau d'échaudage (102), qui sont adaptés pour prélever et/ou amener de l'eau d'échaudage dans et/ou du contenant d'échaudage (101), sont installés à une hauteur (H) prédéfinie sur le contenant d'échaudage (101), dans lequel la hauteur (H) prédéfinie est définie pour empêcher que de grossières impuretés, en particulier des corps d'animaux, ne puissent parvenir dans le système de traitement d'eau d'échaudage (102).

7. Système d'eau d'échaudage (100) selon l'une quelconque des revendications précédentes, dans lequel le circuit d'eau d'échaudage présente un contenant de stockage (104), qui est relié au contenant d'échaudage (101) et qui est adapté pour diminuer des fluctuations d'un niveau d'eau dans le contenant d'échaudage (101).

8. Système d'eau d'échaudage (100) selon la revendication 7, dans lequel le contenant de stockage (104) présente un dispositif de mesure (105) qui est adapté pour mesurer le niveau d'eau dans le contenant d'échaudage (101) et une unité d'alarme (106), qui arrête le circuit d'eau d'échaudage et émet un signal d'alarme lorsqu'un niveau d'eau n'est pas adapté pour le fonctionnement en toute sécurité du système d'eau d'échaudage (100).

9. Système d'eau d'échaudage (100) selon l'une quelconque des revendications précédentes, dans lequel le contenant d'échaudage (101) présente un élément de chauffage d'eau d'échaudage (108), qui est adapté pour chauffer l'eau d'échaudage dans le contenant d'échaudage (101) à la première température d'eau d'échaudage (T1) et/ou pour maintenir l'eau d'échaudage pendant l'échaudage des animaux de boucherie dans le contenant d'échaudage (101) à la première température d'eau d'échaudage (T1).

10. Système d'eau d'échaudage (100) selon l'une quelconque des revendications précédentes, dans lequel le circuit d'eau d'échaudage présente des tubes (122) avec un diamètre intérieur qui est adapté pour laisser s'écouler l'eau d'échaudage non filtrée à travers le circuit d'eau d'échaudage et, par exemple,
le diamètre intérieur des tubes (122) est d'au moins 20 mm, en particulier est compris entre 20 mm et 80 mm, de manière préférée est de 21 mm.

11. Système d'eau d'échaudage (100) selon l'une quelconque des revendications précédentes, dans lequel le circuit d'eau d'échaudage présente au moins un capteur de température (109) destiné à mesurer une température dans le circuit d'eau d'échaudage et un dispositif de commande (123), en particulier une pompe de fréquence, destiné à commander un écoulement d'eau d'échaudage à travers le circuit d'eau d'échaudage, dans lequel le dispositif de commande (123) commande l'écoulement traversant de l'eau d'échaudage en raison de valeurs de température qui sont définies par les capteurs de température (109).

12. Système d'eau d'échaudage (100) selon la revendication 11, dans lequel le dispositif de commande (123) est adapté pour arrêter l'écoulement de l'eau d'échaudage à travers le système d'eau d'échaudage (100) lorsque la première, la deuxième ou la troisième température d'eau d'échaudage (T1, T2, T3) s'écarte d'une température prédéfinie correspondante.

13. Système d'eau d'échaudage (100) selon l'une quelconque des revendications précédentes, dans lequel le système d'eau d'échaudage (100) présente par ailleurs un système de nettoyage (120), dans lequel le système de nettoyage (120) comprend un liquide de nettoyage et est adapté pour être connecté au circuit d'eau d'échaudage après le fonctionnement du système d'eau d'échaudage, (100) pour nettoyer le circuit d'eau d'échaudage.

14. Système d'eau d'échaudage (100) selon la revendication 1,
dans lequel de l'eau d'échaudage pasteurisée est ramenée dans le contenant d'échaudage (101), et adapté par ailleurs pour réchauffer l'eau d'échaudage provenant du contenant d'échaudage (101) après le prélèvement du contenant d'échaudage (101), dans une première phase (601), d'une première température d'eau d'échaudage (T1) à une deuxième température d'eau d'échaudage (T2), pour réchauffer l'eau d'échaudage réchauffée à la deuxième température d'eau d'échaudage (T2), dans une deuxième phase (602), à une troisième température d'eau d'échaudage (T3) et pour maintenir l'eau d'échaudage pendant un laps de temps défini à ladite troisième température d'eau d'échaudage (T3) et pour refroidir, dans une phase de refroidissement (604), l'eau d'échaudage pasteurisée environ à la première température d'eau d'échaudage (T1) de l'eau d'échaudage dans le contenant d'échaudage (101) et pour fournir, lors du refroidissement, son énergie thermique à l'eau d'échaudage dans la première phase (601) et/ou à l'eau fraîche, laquelle est amenée au contenant d'échaudage (101) et laquelle remplace de l'eau d'échaudage, laquelle est emportée avec les animaux de boucherie en quittant le contenant d'échaudage (101).

15. Système d'eau d'échaudage (100) selon la revendication 1, dans lequel
le système de traitement d'eau d'échaudage (102) est adapté pour maintenir la concentration de germes dans le contenant d'échaudage (101) sur un laps de temps prescrit à un niveau à peu près constant entre 10³ et 10⁵ germes par ml.

16. Procédé de traitement d'eau d'échaudage dans un abattoir, dans lequel le procédé comprend les étapes :
- de prélèvement d'eau d'échaudage d'un contenant d'échaudage (101),
- de pasteurisation d'eau d'échaudage, et
- de retour de l'eau d'échaudage dans le contenant d'échaudage (101) après la pasteurisation, dans lequel les étapes du prélèvement, de la pasteurisation et du retour forment un circuit d'eau d'échaudage fermé,
**caractérisé en ce que** l'étape de la pasteurisation comprend par ailleurs les étapes :
- d'acheminement de l'eau d'échaudage après le prélèvement du contenant d'échaudage (101) à travers un premier élément d'échange de chaleur (111),
- de chauffage de l'eau d'échaudage dans le premier élément d'échange de chaleur (111) d'une première température d'eau d'échaudage (T1) à une deuxième température d'eau d'échaudage (T2),
- d'acheminement de l'eau d'échaudage depuis le premier élément d'échange de chaleur (111) dans un deuxième élément d'échange de chaleur (112),
- de chauffage de l'eau d'échaudage dans le deuxième élément d'échange de chaleur (112) à une troisième température d'eau d'échaudage (T3), dans lequel la troisième température d'eau d'échaudage (T3) est adaptée pour la pasteurisation d'eau d'échaudage,
- de retour de l'eau d'échaudage du deuxième élément d'échange de chaleur (112) dans le premier élément d'échange de chaleur (111),
- de refroidissement de l'eau d'échaudage à la première température d'eau d'échaudage (T1), dans lequel la première température d'eau d'échaudage (T1) est adaptée pour l'échaudage d'animaux de boucherie.

17. Procédé selon la revendication 16, qui présente par ailleurs l'étape de l'amenée d'eau fraîche provenant d'un circuit d'eau fraîche (103) dans le contenant d'échaudage (101), dans lequel l'étape de l'amenée d'eau fraîche présente l'écoulement de l'eau fraîche à travers le premier élément d'échange de chaleur (111) et le chauffage de l'eau fraîche à une première température d'eau fraîche (T1), dans lequel la première température d'eau fraîche est adaptée pour échauder des animaux de boucherie.

18. Procédé selon l'une quelconque des revendications 16 ou 17, qui présente par ailleurs l'étape du nettoyage du circuit d'eau d'échaudage après le fonctionnement du circuit d'eau d'échaudage,
dans lequel l'étape du nettoyage présente par ailleurs les étapes :
- d'introduction dans le circuit d'eau d'échaudage de liquide de nettoyage qui est adapté pour nettoyer le circuit d'eau d'échaudage,
- de chauffage du liquide de nettoyage dans le circuit d'eau d'échaudage,
- d'écoulement du liquide de nettoyage à travers le circuit d'eau d'échaudage pendant un laps de temps qui est adapté pour nettoyer le circuit d'eau d'échaudage au moyen du liquide de nettoyage, et
- d'évacuation du liquide de nettoyage hors du circuit d'eau d'échaudage et de rinçage ultérieur du circuit d'eau d'échaudage au moyen d'eau fraîche et/ou par exemple, de commande d'un flux d'eau d'échaudage traversant le circuit d'eau d'échaudage par un dispositif de commande (123) de telle manière qu'une quantité définie (par exemple 25 %) d'eau d'échaudage est pasteurisée au moins une fois dans l'heure.

19. Procédé selon la revendication 16, dans lequel le procédé présente :
- une première phase (601), dans laquelle de l'eau d'échaudage présentant une première température d'eau d'échaudage (T1) est chauffée à une deuxième température d'eau d'échaudage (T2),
- une deuxième phase (602), dans laquelle de l'eau d'échaudage est chauffée à une troisième température d'eau d'échaudage (T3), dans lequel la troisième température d'eau d'échaudage (T3) est adaptée pour la pasteurisation d'eau d'échaudage,
- une troisième phase (603), dans laquelle l'eau d'échaudage est maintenue pendant un laps de temps défini au-dessus de la troisième température d'eau d'échaudage (T3), dans lequel le laps de temps suffit pour pasteuriser l'eau d'échaudage et le procédé présente, après la troisième phase (603), une quatrième phase (604), dans laquelle l'eau d'échaudage est refroidie de la troisième température à la première température, dans lequel la première température est adaptée pour échauder des animaux de boucherie, en particulier des volailles.

20. Procédé de fabrication de produits à base de volaille, dans lequel le procédé présente les étapes :
- d'échaudage de la volaille, dans lequel l'eau d'échaudage est traitée selon le procédé selon la revendication 17,
- de transformation de la volaille échaudée en un produit à base de volaille, dans lequel chacun des produits à base de volaille présente, indépendamment du jour de la semaine ou de l'heure après le processus de transformation, en continu une concentration en germes de 10⁴ au maximum, de manière préférée de 10³ germes par mg au maximum.
